# EUROPÄISCHE PATENTSCHRIFT

(11) **EP 3 416 473 B1**
(45) Veröffentlichungstag und Bekanntmachung des Hinweises auf die Patenterteilung: **19.05.2021**
(21) Anmeldenummer: 17704508.5
(22) Anmeldetag: 16.02.2017
(51) Int. Cl.: A01D 89/00

(54) **PICK-UP MIT ZINKENRINGEN UND ZINKENSEGMENTEN**
GATHERING DEVICE FOR CROPS
DISPOSITIF DE RECEPTION DE RECOLTE

(30) Priorität: 19.02.2016 DE 102016102916; 19.02.2016 DE 202016104504 U; 03.05.2016 EP 16168029; 19.08.2016 DE 102016115396
(43) Veröffentlichungstag der Anmeldung: 26.12.2018
(60) Teilanmeldung: 21164591.6
(73) Patentinhaber: B. Strautmann & Söhne GmbH u. Co. KG, 49196 Bad Laer (DE)
(72) Erfinder: LAUMANN, Christopher, 33428 Harsewinkel (DE); QUEBE, Friedrich, 49448 Brockum (DE); STRAUTMANN, Wolfgang, 49196 Bad Laer (DE)
(74) Vertreter: Träger, Denis
(86) Internationale Anmeldenummer: PCT/EP2017/053528
(87) Internationale Veröffentlichungsnummer: WO 2017/140797

(56) Entgegenhaltungen:
- EP-A1- 0 116 514
- EP-A1- 0 224 424
- EP-A1- 2 700 296
- EP-A1- 3 028 558

## Beschreibung

Die Erfindung betrifft eine drehbare, in eine landwirtschaftliche Erntemaschine eingebaute Aufnahmevorrichtung für Erntegut. Eine solche Aufnahmevorrichtung wird im Folgenden auch Pick-up genannt. Die Pick-up umfasst eine walzenförmige Trommel sowie eine Vielzahl von auf der Trommel angeordneten und den Außendurchmesser der Trommel überragenden Zinken-Ringen. Zwischen sich benachbarten Zinkenringen sind Zwischenräume zur Aufnahme von Abstreifern vorgesehen. Die Zinkenringe umfassen Zinkensegmente aus einem elastischen Kunststoff.

Die Erfindung betrifft weiterhin ein aus einem elastischen Material hergestelltes Zinkensegment für eine Aufnahmevorrichtung an einer Landmaschine, wie Erntemaschine für Halm- und Blattgut oder Heuwerbemaschine. Das Zinkensegment umfasst einen Sockel mit einem Befestigungsbereich zur Verbindung des Zinkensegments mit dem Zinkenring und wenigstens einen aus dem Sockel hervortretenden Einzelzinken.

Weiterhin betrifft die Erfindung eine Erntemaschine für Halm- und Blattgut mit der genannten Aufnahmevorrichtung und/oder den genannten Zinkensegmenten. Bei der Erntemaschine kann es sich z.B. um einen Ladewagen, eine Ballenpresse oder einen Feldhäcksler handeln, bei den Heuwerbemaschinen kommen beispielsweise Schwadleger (Merger) in Betracht.

Eine Aufnahmevorrichtung der eingangs genannten Art ist in DE 100 21 748 A1 offenbart worden. An der Trommel 12 sind hervorstehende, einzelne Förderzinken, Finger 16 genannt, so verteilt, dass sie voneinander beabstandete Förderzinken-Gruppen bilden. Zwischen die Finger 16 greift ein Zwischenförderer 14 ein, der das Erntegut an einen Abstreifer 28 übergibt. Die Finger 16 ragen unmittelbar aus der Mantelfläche der Trommel 12 hervor, sind untereinander also nicht in Form von Ringen miteinander verbunden. Die Finger 16 sind aus einem elastischen Material, wie Gummi, gefertigt und haben die Form von sich in Richtung Trommel verbreitenden Walzenkörpern. Dementsprechend verbreitern sich auch die Zwischenräume in Richtung Spitze der Finger.

Im Ernteeinsatz nimmt die rotierende Trommel das Erntegut mittels der Finger auf. Dabei lagert sich das Erntegut zwischen den Fingern auf der Trommel ab. Um das Erntegut weiter zu fördern muss es von der Pick-up abgelöst und nachfolgenden Aggregaten zugeführt werden. Da lediglich die Finger aus der Mantelfläche der Trommel hervorragen, kann es zu Problemen kommen, wenn sich Erntegut zwischen radial benachbarten Förderzinken auf der Mantelfläche der Trommel absetzt. Das Erntegut kann dann unter Umständen von den Abstreifern nicht vollständig untergriffen werden und der Gutsfluss wird gestört.

Zwar ist in DE 100 21 748 A1 die Art und Weise der Befestigung der Finger 16 an der Trommel 12 nicht beschrieben, jedoch lässt die in den Figuren dargestellte Anordnung vermuten, dass die direkt an der Trommel 12 angeordnete Finger 16 bei größeren, beispielsweise durch Fremdkörper verursachten, mechanischen Belastungen und Schmutzansammlungen trotz ihrer Elastizität an der Kontaktstelle mit der Trommel brechen kann. Dies kann zu einem erheblichen Arbeitsaufwand und Betriebsausfall beim Einsetzen neuer Finger führen.

Eine weitere Aufnahmevorrichtung ist aus DE 1158307 A bekannt. Bei dieser Aufnahmevorrichtung umfasst jeder Zinkenring zwei Ringleisten 31 und 34, von denen die eine an die Trommel (Trägerrohr 16) der Aufnahmevorrichtung geschweißt ist. Zwischen den beiden Ringleisten ist ein Gummistreifen eingeklemmt, der einen Verankerungsring 19 für die Zinken 22 bildet. Die Montage erfolgt indem zunächst die Zinken durch im Gummistreifen vorgesehene Löcher gesteckt werden. Die Zinken weisen an ihrer Basis eine Verdickung auf, deren Durchmesser größer ist als der Durchmesser der Löcher, durch die die Zinken gesteckt werden. Die Zinken können somit nicht vollständig durch den Gummistreifen gesteckt werden, sondern werden vielmehr an ihrer Basis gehalten. Die Gummileiste mit eingesteckten Zinken wird um das Trägerrohr 16 gelegt und dort mit ihrer einen Seite an der Wandung der festgeschweißten Ringleiste 31 platziert. Anschließend wird die zweite, verschiebbar auf dem Trägerrohr angeordnete Ringleiste 34 an den Verankerungsring 19 geschoben, so dass der Gummistreifen zwischen den beiden Ringleisten eingeklemmt wird. Die Ringleisten weisen zudem jeweils eine Schulter auf, die den jeweiligen Rand der Gummileiste überragt. Schließlich werden die beiden Ringleisten durch Klemmverschraubungen fest miteinander verspannt.

Zwar sind die Zinken der beschriebenen Vorrichtung auswechselbar, jedoch ist das Austauschen eines Zinkens sehr aufwendig, da der Zinkenring zunächst demontiert werden muss. Nach Lösen der Ringleiste 34 muss der Gummistreifen insgesamt mit den eingesteckten Zinken ausgebaut werden. Erst dann ist das Auswechseln eines oder mehrere Zinken möglich.

Förderzinken selbst sind in unterschiedlichen Ausführungen bekannt. Neben den bereits beschriebenen Förderzinken aus einem elastischen Material werden häufig aus einem hochwertigen Federdraht hergestellte Doppelförderzinken verwendet.

DE 202011002316 U1 zeigt einen Gutaufnehmer mit aus Federdraht hergestellten Zinken 14. Die Zinken weisen einen geraden Teil 14a und einen spiralförmigen Teil 14b auf. Der Federdraht ist im mittleren Bereich in Form einer Windungsspirale ausgeführt, aus welcher die Enden des Federdrahtes linear hervortreten und so die Zinkenschenkel ausbilden. Konstruktionsbedingt hängt die Funktionsweise dieser Zinken vom Zusammenwirken der Federwirkung des spiralförmigen Teils mit der Federwirkung des geraden Teils, also der Zinkenschenkel, ab. Würden solche Doppel-Förderzinken aus einem anderen Material hergestellt, sind diese denen aus Federstahl bezüglich der Federungseigenschaften und Lebensdauer deutlich unterlegen. Nachteilig an diesen Doppel-Förderzinken ist, dass der Windungsbereich der Doppel-Förderzinken stets in einem vom Erntegut nicht beaufschlagten Bereich montiert sein muss, da sich andernfalls das Erntegut im Windungsbereich der Doppel-Förderzinken verfangen kann und so Stauungen und Beschädigungen auftreten würden.

Derartige Doppel-Förderzinken werden in der Regel rundum mit Abstreifern abgedeckt. Zwischen den Abstreifern befinden sich Spalten, die die Schenkel der Doppel-Förderzinken hervortreten lassen. Diese Abstreifer haben den Nachteil teuer zu sein und erschweren darüber hinaus den Zugang zu den Doppel-Förderzinken, so dass ein Austausch von Förderzinken bei Reparaturen und Wartungsarbeiten einen erheblichen Aufwand erfordert.

Die bekannten Einzel- und Doppel-Förderzinken haben im Einsatz die Eigenschaft, nach dem Ausweichen der Schenkel unter Belastung oder bei Bodenberührung teils schlagartig zurückzuschnellen. Hierdurch werden Lastspitzen verursacht, die zu Schäden im Befestigungsbereich oder an den Zinken selbst führen können. Weiterhin verringern die durch die schlagartige Entlastung bewirkten Vibrationen die Lebensdauer der Förderzinken.

Darüber hinaus zeigen die bekannten Doppel-Förderzinken aus Federdraht bei Bodenberührung ein relativ aggressives Verhalten und können beispielsweise eine unter dem aufzunehmenden Erntegut befindliche Grasnarbe durch Aufreißen beschädigen.

Weiterhin ist nachteilig, dass die Federkraft im Wesentlichen in der Spirale gespeichert wird und nicht im eigentlichen Zinken. Gegenüber der Spirale ist der Schenkel des Zinkens - je nach Qualität des verwendeten Materials - eher weniger biegsam, so dass bei Auftreffen des Schenkels oder der Spitze des Schenkels auf einen auf dem Boden liegenden Fremdkörper (z.B. einen Stein) die Spirale des Doppel-Förderzinkens gespannt wird. Der eigentliche Schenkel des Doppel-Förderzinkens bleibt dagegen eher in einem geraden Zustand. Wenn jetzt die Spirale so stark gespannt ist, dass die gespeicherte Kraft größer ist als die zum Bewegen des Gegenstandes notwenige Kraft, schnellt der Zinken nach vorne und bewegt den Gegenstand, der bisher blockiert hat, ruckartig. So können beispielsweise Steine oder sonstige Fremdkörper aus dem Boden gerissen und in die Umgebung oder den Futterschwad katapultiert werden. Diese Steine können beim Auftreffen direkte Beschädigungen, beispielsweise an einem ziehenden Traktor, bewirken. Darüber hinaus können sie in den Schwad bzw. den Strom des aufzunehmenden Ernteguts geschleudert werden und sich dort verfangen. Die Fremdkörper gelangen dann zu den nachgelagerten Arbeitswerkzeugen der Erntemaschine und können diese beschädigen und/oder bleiben im Futter bzw. Fördergut und können so die Gesundheit von Tieren gefährden, die das Futter zu einem späteren Zeitpunkt fressen sollen.

Bei der bereits weiter oben genannten Aufnahmevorrichtung DE 10021748 A1 bestehen die Förderzinken aus einzelnen Fingern, die in mehreren linear am Umfang versetzten Reihen aus der Trommel hervortreten. Die Abstreifarbeit des Ernteguts von den Fingern wird von einem rotierenden Zwischenförderer ausgeführt. Die Förderzinken können aus Gummi oder einem anderen federnden Material bestehen und somit eine bodenschonende Eigenschaft aufweisen. Sie weisen jedoch eine schlechtere Fördereigenschaft als die bekannten Doppel-Förderzinken aus Stahldraht auf. Außerdem kann sich Erntegut im Bereich der Zinkenfüße bzw. des Trommelmantels ansammeln, da der dargestellte Zwischenförderer lediglich im Außenbereich der Förderzinken eine kammartige Wirkung hat und seine Förderelemente nicht an den Trommelmantel heranreichen. Darüber hinaus wird nicht offenbart, ob und wie einzelne Finger ausgetauscht werden können.

Aus EP 0 224 424 ist eine Aufnahmevorrichtung mit den Merkmalen der Präambel des Anspruchs 1 bekannt.

Aus EP 0 116 514 A1 ist ein Aufsammelgerät für auf dem Boden liegendes Pflanzengut bekannt. Das Aufsammelgerät umfasst eine walzenförmige Trommel mit rotierenden Aufnahmeelementen, die sich dadurch auszeichnen, dass diese Elemente die Form von am Umfang verzahnte oder mit radialen Armen versehene Scheiben haben. Das von den Aufnahmeelementen aufgenommene Pflanzengut wird im Arbeitseinsatz von Abstreifelementen übernommen und weitergeleitet. Die Abstreifelemente sind hinter den Aufnahmeelementen angebracht und können den Erntegutstrom im vorderen Bereich der Aufnahmeelemente somit nicht verbessern.

Aus DE 10 2014 117 739 A1 sind aus einem elastischen Material hergestellte Doppel-Förderzinken bekannt. Diese Doppelförderzinken weisen jeweils einen Sockel 9 auf, der in dafür vorgesehene Zinkentaschen 3 zunächst lose eingesteckt und dann mittels einer Schraubverbindung fixiert sind. Die Zinkentaschen 3 stellen somit Vertiefungen in der Oberfläche der Trommel 2 zur Aufnahme der Doppelförderzinken dar. Die Herstellung einer solchen Trommel mit eingearbeiteten Vertiefungen ist aufwendig und die Aufnahmevorrichtung dadurch insgesamt kompliziert im Aufbau

Die vorliegende Erfindung hat sich die Aufgabe gestellt, eine Aufnahmevorrichtung für Landmaschinen vorzuschlagen, die unempfindlich gegenüber Verschmutzungen ist und das Erntegut widerstandsarm weiterleitet. Weiterhin ist es Aufgabe der Erfindung, eine Aufnahmevorrichtung vorzuschlagen, bei der die Zinkensegmente einfach und unabhängig voneinander montierbar sind. Die Förderzinken selbst sollen eine definierte Materialqualität und optimale Federungseigenschaften aufweisen und durch ihre Formgebung eine einfache Montage, bzw. Demontage zulassen. Darüber hinaus soll der Zinken so beschaffen sein, dass er bei Auftreffen auf einen ihn blockierenden Gegenstand partiell ausweichen kann, insbesondere soll die durch den Gegenstand auf den Zinken wirkende Kraft sich nicht so ruckartig entladen, dass dieser Gegenstand nach vorne in das zu fördernde Halm- und Blattgut geschossen wird und sich darin verfängt.

Die erfindungsgemäße Aufgabe wird gelöst durch eine Aufnahmevorrichtung mit den Merkmalen des Anspruchs 1 sowie durch eine Erntemaschine mit den Merkmalen des Anspruchs 8.

Die Zinkenringe bilden den Außendurchmesser der Trommel überragende Konturen aus, zwischen denen Zwischenräume verbleiben, die im Wesentlichen U-förmige, kanalartige Nuten ausbilden. Da das Erntegut in der Regel aus halmartigen Strukturen besteht und eine Art Teppich ausbildet, stützt es sich, wenn es im Ernteeinsatz von den Förderzinken erfasst wird, auf den Sockeln der Zinkenringe ab und dringt nicht oder nur in geringem Umfang, in die Zwischenräume ein. Die Zwischenräume bleiben somit frei von Futter und der ganze Erntegut-Teppich kann widerstandarm von den Abstreifern untergriffen werden.

Weiterhin ist es wesentlich, dass die Zinkenringe und die Zinkensegmente zueinander komplementäre Befestigungsmittel umfassen, mittels derer die Zinkensegmente ohne Demontage des Zinkenrings montierbar und bei Bedarf austauschbar sind. Ohne Demontage des Zinkenrings ist in diesem Zusammenhang so zu verstehen, dass zur Montage der Zinkensegmente keine die Zinkensegmente insgesamt haltenden Befestigungsmittel vorgesehen sind. Solche die Zinkensegmente insgesamt haltenden Befestigungsmittel unterscheiden sich von den erfindungsgemäßen Befestigungsmitteln dadurch, dass sie den Austausch einzelner Zinken unabhängig voneinander nicht zulassen.

Der große Vorteil einer Kombination aus:
- den Trommeldurchmesser überragenden Zinkenringen und
- an die Zinkenringe gekoppelte, aber unabhängig von den Zinkenringen montierbaren, Zinkensegmenten
liegt darin, dass einerseits der Gutsfluss bei der Aufnahme von Erntegut widerstandsarm erfolgen kann und andererseits das so geschaffene System gleichzeitig besonders wartungsfreundlich ist.

In einer ersten Ausführungsform kann als Befestigungsmittel zwischen Zinkenring und Zinkensegment eine oder mehrere Schraubverbindungen vorgesehen sein. Der Zinkenring kann dabei entweder ein eigenständiges Bauteil sein, an welches die Zinkensegmente angeschraubt werden oder der Zinkenring kann durch miteinander verschraubte Zinkensegmente ausgebildet werden. Bei den komplementären Befestigungsmitteln handelt es sich somit um Schrauben und Muttern beziehungsweise Gewindebohrungen. Die Gewindebohrungen können auch direkt in der Trommel angeordnet sein. In diesem Fall werden die Zinkensegmente somit auf die Trommel geschraubt. Auch bei dieser Ausführung ist wesentlich, dass jeweils eine Anzahl von Zinkensegmenten auf der Trommel eine ringförmig geschlossene Kontur mit dazwischen liegenden, kanalartigen Nuten für die Abstreifer ausbildet und die Zinken ohne Demontage anderer Teile an- und abgebaut werden können.

Bei einem Zinkenring mit insgesamt acht Einzelzinken weisen die beiden Ringteile vorzugsweise jeweils vier Einzelzinken auf. Sind drei Ringteile und beispielsweise neun Einzelzinken vorgesehen, weist jedes Ringteil vorzugsweise drei Einzelzinken auf. Weiterhin kann vorgesehen sein, dass die Anzahl der Ringteile der Anzahl der Einzelzinken entspricht, jedes Ringteil also jeweils mit einem Förderzinken ausgestattet ist.

Besonders bevorzugt ist eine Zinkenring-Ausführungsform, bei der in Ergänzung zu den Zinkensegmenten, bzw. zwischen diesen, zinkenlose Zwischensegmente vorgesehen sind. Zinkentragenden Segmente und zinkenlosen Zwischensegmente bilden dann gemeinsam einen Zinkenring aus. Der Einsatz von zusätzlichen Zwischensegmenten ist von besonderem Vorteil, weil hierdurch eine Vereinheitlichung der Zinkensegmente ermöglicht wird.

Vorteilhaft ist es, wenn die Förderzinke in einem Materialstück zusammen mit dem Sockel gefertigt ist. Bevorzugt wird eine Ausführung aus einem elastomeren, synthetischen Kunststoff, beispielsweise Polyurethan (PUR) oder Silikonkautschuk. Diese speziell für die Förderzinken gewählten Elastomere zeichnen sich durch eine sehr gute Gleiteigenschaft aus. Selbstverständlich können auch die Zwischensegmente aus solchen elastisch verformbaren Thermoplasten gefertigt sein. Da jedoch die elastische Eigenschaft bzw. die federnde Wirkung für die Zwischensegmente nicht unbedingt erforderlich ist, ist es auch möglich, die Zwischensegmente aus einem kostengünstigeren Kunststoff oder anderem Material herzustellen. Weiterhin ist es möglich, die Elastizität des ganzen Zinkensegmentes im Herstellungsprozess so einzustellen, dass die Zinkenbasis bzw. der Sockel gegenüber der Förderzinke oder deren Spitze weniger elastisch ist.

In einer besonderen Ausführungsform sind die Förderzinken und die Sockel lösbar miteinander verbunden. Die lösbare Verbindung kann beispielsweise realisiert werden, indem die Basis eine Bohrung mit einer eingesetzten oder einvulkanisierten Gewindebuchse aufweist und der Förderzinken selbst an seinem Ende mit einem entsprechenden Gewinde ausgestattet ist. Insofern können für das Basisteil und den Förderzinken selbst unterschiedliche Materialien gewählt werden, beispielsweise ein wenig elastischer Kunststoff für das Basisteil und ein elastischer, hochfester Kunststoff für den Förderzinken selbst.

In einer bevorzugten Ausführungsform weisen die Zinkensegmente und die Zwischensegmente, soweit solche vorgesehen sind, einen Innenradius auf, welcher halb so groß ist, wie der Außendurchmesser der Trommel. Ein auf die Trommel aufmontierter Zinkenring umschließt die Trommel somit spielfrei und die Einzelteile lassen sich leicht montieren.

Für eine schnelle, lösbare Anbringung der Zinkenringe an der Trommel ist es vorteilhaft, wenn die Zinkensegmente und Zwischensegmente Teilringe, beispielsweise Halbringe bilden, welche bereits vormontiert sind. Diese Teilringe können entweder aus zusammenmontierten Zinkensegmenten bestehen oder bereits einstückig hergestellt sein.

In einer vorteilhaften Ausführung sind die Zinkenringe auf der Trommel unterschiedlich weit voneinander beabstandet. Eine solche Gestaltung wird dadurch ermöglicht, dass bei der erfindungsgemäßen Aufnahmevorrichtung die Verwendung von Einzelzinken möglich ist. Bei den als Stand der Technik bekannten Aufnahmevorrichtungen werden in aller Regel sogenannte Doppelzinken aus Federstahldraht verwendet. Solche Doppelzinken weisen eine mittlere Windungsspirale auf, die an beiden Seiten in einem lang gestreckten Ende, dem eigentlichen Zinken, ausläuft. Die Verwendung solcher Doppelzinken hat zur Konsequenz, dass, bei Verwendung einheitlicher Zinken auf der gesamten Aufnahmetrommel, die Abstände zwischen den Zinken in Achsrichtung der Trommel immer gleich sind. Da alle Zinken gleich sind, die im Ernteeinsatz auftretende Belastung im mittleren Bereich der Aufnahmevorrichtung, also dort, wo in aller Regel das meiste Erntegut aufzunehmen ist, jedoch am Größten ist, ist die auf die einzelnen Zinken einwirkende Last unterschiedlich.

Bei der erfindungsgemäßen Aufnahmevorrichtung kann der Abstand der Zinken anforderungsgerecht angepasst werden. Es kann insbesondere vorgesehen sein, dass der Abstand zwischen zwei Zinkenringen im mittleren Bereich kleiner ist als in den Randbereichen. Hierdurch wird die Last im mittleren Bereich der Aufnahmetrommel auf eine größere Anzahl Förderzinken verteilt und damit für den einzelnen Zinken reduziert. Alternativ hierzu oder zusätzlich kann auch vorgesehen sein, dass der Abstand der äußersten seitlichen Zinkenringe reduziert ist um so die dort angeordneten Zinken, die bei Kurvenfahrt einer erhöhten Belastung ausgesetzt sein können, zu entlasten.

In einer weiteren Ausführungsform ist vorgesehen, dass die Befestigungsmittel eine Rastverbindung zwischen Zinkenring und Zinkensegment ausbilden. Unter einer Rastverbindung wird eine Verbindung verstanden, bei der dem Zusammenhalten der Teile eine kraft-formschlüssige Verbindung zu Grunde liegt. Die konstruktiven Merkmale einer Rastverbindung sind beispielsweis Haken, Noppen oder Wülste an einem der beiden zu verbindenden Teile, die nach der Verbindung mit dem anderen Teil in entsprechende Vertiefungen, Aussparungen oder Hinterschnitte des anderen Teils einrasten.

Das Zinkensegment mit Rastverbindung umfasst vorzugsweise einen einzigen aus dem Sockel hervortretenden Einzelzinken sowie zwei Ausleger.

Die Zinkensegmente sind so konzipiert, dass einer der Ausleger im montierten Zustand bezogen auf die Zinkenmittelachse in Drehrichtung der Trommel weist. Der andere Ausleger weist in die entgegengesetzte Richtung.

Die erfindungsgemäße Rastverbindung wird durch wenigstens ein Rastelement ausgebildet, dass vorzugsweise im Endbereich der Ausleger angeordnet ist und mit einem kompatiblen, am Zinkenring vorgesehenen, Rastelement zusammenwirkt. Die Rastverbindung wird somit nach einer Art Klick-System vorzugsweise werkzeuglos hergestellt.

Die Ausleger und/oder das Rastelement sind elastisch verformbar, so dass eine lösbare Rastverbindung zwischen dem Zinkensegment und dem Zinkenring realisierbar ist.

Die Rastverbindung kann beispielsweise realisiert werden, indem der Sockel eines Zinkensegments eine Kontur aufweist, die zu einer Aussparung in dem Zinkenring kompatibel ist und eine formschlüssige Verbindung ausbildet. Die formschlüssige Verbindung kann so ausgeführt sein, dass der Sockel des Förderzinkens sich einerseits bei Drehung der Trommel im Arbeitseinsatz, also bei der Förderung von Erntegut, am Zinkenring abstützt und andererseits bei umgekehrter Belastung lösbar ist.

In einer bevorzugten Ausführungsform weist der Sockel eines Zinkensegments wenigstens eine Nut auf, die den Sockel in die beiden Ausleger unterteilt. Bei Krafteinwirkung auf einen Ausleger in Richtung der Nut wird die Verformbarkeit wenigstens eines Auslegers hierdurch erleichtert, so dass der in den Bereich der Nut hinein elastisch verformte Förderzinken aus seiner formschlüssigen Verbindungsstelle entnehmbar ist. Dies ist insbesondere dann von Vorteil, wenn das Zinkensegment weitgehend formschlüssig in eine am Zinkenring angebrachte Vertiefungskontur eingesetzt ist. In einem solchen Fall erfordert die elastische Verformung einen sehr großen Kraftbedarf, da das zwar grundsätzlich verformbare Material des Zinkensegments in keine Richtung ausweichen kann, sondern im Extremfall nur durch Kompression verformbar ist. Die zusätzlich vorgesehene Nut schafft somit einen Freiraum, in den hinein sich ein Teil des Auslegers bei Krafteinwirkung verformen kann.

Um zu verhindern, dass sich das Zinkensegment, beispielsweise durch eine große, im Arbeitseinsatz vom Erntegut ausgeübte Lastkraft, ungewollt löst, kann im Sockel des Zinkensegmentes eine in die Nut mündende Bohrung vorgesehen sein. Diese Bohrung dient zur Aufnahme eines die Verformbarkeit des Auslegers blockierenden Stopfens. Wie bereits erwähnt ist die Haltekraft des Zinkensegmentes in der Aufnahmevorrichtung insbesondere davon abhängig, ob und in welche Richtung sich die Ausleger im montierten Zustand verformen können. Durch die Bohrung und einen in die Bohrung eingesetzten Stopfen kann das Zinkensegment somit im Arbeitseinsatz sicher gehalten und, nach Demontage des Stopfens, bei Bedarf ausgewechselt werden. Alternativ zur Sicherung mittels eines Stopfens kann auch eine Sicherung mit einer Schraube vorgesehen sein.

Das Rastelement kann in Abhängigkeit von der gewünschten zu realisierenden Ansprechschwelle mit mehr oder weniger aggressiv wirkenden Konturformen ausgestattet sein. Beispielsweise kann als Rastelement eine Rundung vorgesehen sein um eine mit relativ geringem Kraftbedarf auslösbare Ansprechschwelle vorzudefinieren oder es kann eine Zacke vorgesehen sein, die eine mit relativ großem Kraftbedarf auslösbare Ansprechschwelle vordefiniert. Selbstverständlich kommen auch andere geometrische Gestaltungen oder die Kombination mehrerer Konturelemente zur Ausbildung des Rastelementes in Betracht.

Besonders bevorzugt ist weiterhin, wenn am Zinkensegment nicht nur ein einziges, sondern zwei Rastelemente vorgesehen sind. Insbesondere dann, wenn jeweils ein Rastelement an jeweils einem Ausleger angebracht ist, kann das Zinkensegment im montierten Zustand in den beiden in Betracht kommenden Drehrichtungen der Aufnahmevorrichtung sicher gehalten werden.

Von Vorteil ist weiterhin, wenn die wenigstens zwei Rastelemente unterschiedliche Ansprechschwellen aufweisen, so dass bei an die Aufnahmevorrichtung montiertem Zinkensegment das Zinkensegment in Abhängigkeit von der Wirkrichtung einer auf das Zinkensegment einwirkenden Kraft von der Aufnahmevorrichtung lösbar ist. Wenn das Zinkensegment beispielsweise an einer Aufnahmeeinrichtung eingesetzt wird, die grundsätzlich in einer Arbeits-Drehrichtung Erntegut fördert und in der anderen Drehrichtung nicht oder nur wenig belastet wird, kann die eine Ansprechschwellen bei Krafteinwirkung in Arbeits-Drehrichtung so hoch definiert werden, dass das Auslösen einen sehr hohen Kraftbedarf erfordert oder sogar ganz verhindert wird. Die andere Ansprechschwelle, die das Zinkensegment bei entgegengesetzter Krafteinwirkung auslöst, kann dagegen sehr niedrig vordefiniert werden, so dass die Demontage der Zinken durch geringe Krafteinwirkung entgegengesetzt der Arbeits-Drehrichtung ermöglicht wird. Hierdurch wird das Zinkensegment im Arbeitseinsatz sicher gehalten, kann aber trotzdem einfach ausgetauscht bzw. demontiert werden.

Die unterschiedlichen Ansprechschwellen können durch unterschiedliche Konturen der Rastelemente und/oder durch unterschiedliche Längen der Ausleger realisiert sein. So kann ein abgerundetes Rastelement und/oder eine kurze Auslegerlänge vorgesehen sein, um die eine Ansprechschwelle mit niedrigem Kraftbedarf zur Auslösung vorzudefinieren. Die andere Ansprechschwelle, bei der ein hoher Kraftbedarf zur Auslösung vordefiniert werden soll, kann durch ein Rastelement mit einer Zacke und/oder einer großen Auslegerlänge ausgebildet werden.

In einer bevorzugten Ausführungsform weist die Förderzinke eines erfindungsgemäßen Zinkensegments eine sich vom Sockel zu einer an der Förderzinke vorgesehenen Spitze konisch verjüngende Kontur auf. Somit ist im Bereich des Zinkenfußes eine größere Kraft notwendig ist, um den Einzelzinken zu biegen als im Bereich der Zinkenspitze. Der Einzelzinken ist somit an seinem äußeren (dem Ladegut zugewandten) Ende elastischer als an seinem im Bereich des Sockels.

Die Förderzinke kann auch prismatisch, teilprismatisch, walzen- oder teilwalzenförmig sein. Vorzugsweise hat sie die Form eines sich in Richtung Spitze verjüngenden, abgestumpften Obelisken, dessen zwei sich gegenüber liegende Seitenflächen plan und zueinander parallel sind.

Die Förderzinke kann radial oder geneigt, vorzugsweise nachlaufend geneigt, gegenüber dem Sockel ausgerichtet sein.

Eine sich verjüngende, insbesondere eine konische, Kontur des Förderzinkens hat den Vorteil, dass ein solcher Zinken, insbesondere im Bereich der Spitze, wesentlich flexibler als ein herkömmlicher Förderzinken aus Stahldraht sein kann. Die bekannten Doppel-Förderzinken aus Federdraht sind aus einem Draht mit konstantem Durchmesser gewickelt. Dieses Konstruktionsprinzip schließt eine konische Gestaltung des geraden Zinkenendes aus.

Während bei den Doppel-Förderzinken aus Stahldraht bei Auftreffen der Zinkenspitze auf einen Fremdkörper die Energie in der Federspirale gespeichert wird und die vordere Spitze des Stahldrahtes sich sehr wenig biegen lässt um beispielsweise einem Fremdkörper auszuweichen zu können, weicht der erfindungsgemäße Zinken bei Auftreffen auf einen Fremdkörper wesentlich leichter aus. Die Energie wird im Einzelzinken selbst gespeichert.

Die Folge ist, dass beim Auftreffen auf einen Fremdkörper der aus einem elastischen Kunststoff mit einer sich verjüngenden Form gebildete Zinken dem Fremdkörper ausweicht oder von diesem bewegt wird. Ein Doppel-Förderzinken aus Stahldraht mit Windungsspirale oder auch ein aus Stahldraht hergestellter Zinken mit elastischem Zinkenfuß dagegen speichert die eingebrachte Energie im Wesentlichen in der Windungsspirale oder im elastischen Zinkenfuß und gibt diese ruckartig bei Überschreiten einer Kraftschwelle frei.

In einer weiteren Ausführungsform kann mittels der Befestigungsmittel eine kombinierte Rast-Schraubverbindung zwischen Zinkenring und Zinkensegment herstellbar sein. Hierbei weist ein Zinkensegment zwei vorzugsweise in radialer Drehrichtung der Aufnahmevorrichtung ausgerichtete Ausleger auf. Der eine Ausleger ist mittels einer formschlüssigen oder eine kraft-formschlüssige Verbindung an den Zinkenring gekoppelt. Das Zinkensegment wird hierdurch vorzugsweise in alle Richtungen, mit Ausnahme der Richtung, aus der es auf den Zinkenring gesteckt wird, fixiert.

Die verbleibende Bewegungsmöglichkeit wird durch eine Schraubverbindung am zweiten Ausleger des Zinkensegments blockiert. Der zweite Ausleger ist mittels einer Schraubverbindung direkt (Schraube geht durch eine im Ausleger vorgesehene Bohrung) oder indirekt (Ausleger wird durch eine angeschraubte Klemmplatte gehalten) an den Zinkenring gekoppelt. Im Ergebnis kann das Zinkensegment bei gelöster Schraubverbindung auf den Zinkenring gesteckt werden und ist bei montierter Schraubverbindung auf der Trommel fixiert. Hierdurch ergibt sich eine sehr einfache Montierbarkeit der Zinkensegmente. Insbesondere ist es möglich, ein Zinkensegment mit einer einzigen Schraube sicher zu fixieren.

In einer weiteren Ausführungsform umfasst der Zinkenring Stützbleche und Trägerbleche, wobei die Stützbleche gegenüber der Trommel senkrecht angeordnet sind und gemeinsam mit den Trägerblechen eine die Trommel überragende T-förmige Kontur ausbilden. Stützbleche und Trägerbleche bestehen hierbei aus Metall und sind vorzugsweise unlösbar, insbesondere stoffschlüssig durch Anschweißen, mit der Trommel verbunden. Die Zinkenringe sitzen somit fest auf der Trommel. Da die Zinkensegmente auch bei dieser Ausführungsform unabhängig von den Zinkenringen demontierbar sind, ist zum Auswechseln eines Zinkensegments eine Demontierbarkeit der Zinkenringe nicht erforderlich. Eine Trommel mit aufgeschweißten Zinkenringen ist kostengünstig herstellbar und sehr stabil.

Die ringförmige Kontur des Zinkenrings kann keilförmige Aufnahmen für die Zinkensegmente aufweisen. Analog dazu weisen die Zinkensegmente in diesem Fall keilförmigen Ausleger auf, deren Form und Winkel an die keilförmige Aufnahme im Zinkenring angepasst ist. Alternativ hierzu sind auch andere geometrische Formen, beispielsweise gerundete Aufnahmen, möglich. Wichtig ist, dass die am Zinkenring vorgesehenen Aufnahmen kompatibel zu der für die Zinkensegmente vorgesehenen Kontur sind.

Besonders bevorzugt ist eine Ausführungsform, bei der ein Ausleger eines Zinkensegments einen Schlitz aufweist, der bei Einschieben des Zinkensegments in die Aufnahme des Zinkenrings auf ein zum Schlitz kompatibles Konturelement des Zinkenrings greift. Bei diesem Konturelement kann es sich beispielsweise um einen nasenartigen Vorsprung am Zinkenring handeln. Durch die Kontur des Auslegers, insbesondere durch eine keilförmige Kontur, die in eine entsprechende Kontur des Zinkenrings eingreift, wird das Zinkensegment in radialer Richtung fixiert. Der zusätzliche Schlitz, der ebenfalls in radialer Richtung angeordnet ist, wird auf das entsprechende Konturelement am Zinkenring geschoben und fixiert das Zinkensegment in Querrichtung. so dass ein seitliches Ausweichen des Zinkensegments im Arbeitseinsatz unterbunden werden kann.

Der Zinkenring weist erfindungsgemäß einen äußeren Radius auf, der größer ist als der Radius des Abstreifers im in Fahrtrichtung gesehen vorderen Bereich der Aufnahmevorrichtung. Bei im Arbeitseinsatz befindlicher Aufnahmevorrichtung kontaktiert das aufzunehmende Erntegut zunächst den sich drehenden Zinkenring und wird von diesem mitgenommen. Erst danach kontaktiert das Erntegut die Abstreifer, da diese auf Grund ihres geringeren Radius etwas hinter dem Zinkenring zurückstehen. Unter dem Radius des Zinkenringes ist in diesem Fall der Abstand von der Zinkenring-Mittelachse zu einem äußersten Punkt eine Zinkenringes ohne eingesetzte Förderzinken zu verstehen. Der Fluss des Ernteguts wird somit dadurch gefördert, dass das Erntegut zunächst auf Oberflächenbereiche der sich mit der Trommel drehenden Zinkenringe trifft. Da die Abstreifer sich nicht mit der Trommel drehen, sondern vielmehr weitgehend starr an einem Tragrahmen befestigt sind, bremsen sie in gewissem Umfang den Gutsfluss, während die die Abstreifer überragenden Bereiche der Zinkenringe das Erntegut mitnehmen und sogar beschleunigen können.

In einer weiteren bevorzugten Ausführungsform sind die Abstreifer mit ihrer einen Seite am Rahmen der Aufnahmevorrichtung befestigt und weisen gleichzeitig ein freies Ende auf, das nicht nur, wie bei den bereits genannten kammartigen Abstreifern, bis an die Oberfläche der Trommel herangeführt ist, sondern die Trommel vielmehr mindestens so weit umschlingt, dass das freie Ende der Abstreifer eine durch die Mittelpunkte der Zinkenringe definierte waagerechte Ebene durchschneiden. Die Spitze der Abstreifer sticht somit nicht in den Förderfluss des Ernteguts ein, sondern steht zumindest im Wesentlichen senkrecht zu dem Erntegut-Strom, der im Wesentlichen waagerecht an die Aufnahmetrommel herangeführt wird. Vereinfacht gesagt trifft der Erntegut-Strom auf die radiale Oberfläche und nicht auf die Spitzen der Abstreifer, so dass die Abstreifer insgesamt Richtung Trommel gedrückt werden.

Dieser Effekt tritt ein, wenn die Enden der Abstreifer mindestens die genannte waagerechte Ebene durchbrechen. Die Abstreifer umschlingen die Trommel jedoch vorzugsweise noch weiter. Der Winkel, um den die Abstreifer die Trommel ausgehend von der genannten waagerechten Ebene zusätzlich umschlingen kann 0° bis 160° betragen. Vorzugsweise beträgt er 40° bis 120° und höchst vorzugsweise 70° bis 120°. Im optimalen Bereich wird ein Abstreifer auch unter ungünstigen Einsatzbedingungen nicht mit bzw. vom Erntegut-Strom umgebogen werden, weil er sich unter Last schleppend an die Trommel anlegt. Gleichzeitig wird, ähnlich wie bei einer Aufnahmevorrichtung mit kammartigem Abstreifer, im unteren hinteren Bereich der Aufnahmevorrichtung zwischen den Abstreifer-Enden und dem Rahmen der Aufnahmevorrichtung ein Freiraum geschaffen. Erntegutpartikel, die ungewollt von den Förderzinken nicht mit dem Erntegut-Strom weitergeleitet worden sind, sondern vielmehr beim Eintauchen der Förderzinken zwischen den Abstreifern mitgenommen worden sind, können so zumindest ungehindert auf den Boden fallen. Die Gefahr von Verstopfungen bzw. Materialansammlungen in der Aufnahmevorrichtung wird hierdurch reduziert.

Die Erfindung betrifft auch eine Erntemaschine für Halm- und Blattgut oder Heuwerbemaschinen, welche mit der beschriebenen Aufnahmevorrichtung und/oder den beschriebenen Zinkensegmenten ausgestattet ist.

Die Erfindung wird nachstehend beschrieben und in den Zeichnungen dargestellt.
- Fig. 1: zeigt eine Erntemaschine in Gestalt eines Ladewagens mit einer Aufnahmevorrichtung in einer schematischen Seitenansicht;
- Fig. 2: zeigt die Aufnahmevorrichtung aus Fig. 1 in einer perspektivischen Ansicht;
- Fig. 3: zeigt einen Ausschnitt aus einer Aufnahmevorrichtung mit auf die Trommel geschraubten Zinkenringen;
- Fig. 4: zeigt einen Zinkenring gemäß Fig. 3 in einer perspektivischen Ansicht;
- Fig. 5: zeigt ein Zinkensegment des Zinkenringes gemäß Fig. 4 in einer perspektivischen Ansicht;
- Fig. 6: zeigt ein Zwischensegment des Zinkenringes gemäß Fig. 4 in einer perspektivischen Ansicht
- Fig. 7: zeigt einen Ausschnitt aus einer weiteren Ausführungsform einer Aufnahmevorrichtung mit auf die Trommel aufgeschweißten Zinkenringen und darin montierten Zinkensegmenten;
- Fig. 8: zeigt einen Ausschnitt aus der Aufnahmevorrichtung gemäß Fig. 7 in einer teilweise geschnittenen Darstellung;
- Fig. 9: zeigt einen Zinkenring für eine Aufnahmevorrichtung mit einer Vielecktrommel;
- Fig. 10: zeigt den Zinkenring aus Fig. 9 in einer Explosionsdarstellung;
- Fig. 11: zeigt ein Zinkensegment eines Zinkenringes gemäß den Figuren 10 und 12;
- Fig. 12: zeigt eine weitere Ausführungsform eines Zinkenrings mit segmentiertem Innenring für eine Vielecktrommel;
- Fig. 13: zeigt eine weitere Ausführungsform eines Zinkensegments;
- Fig. 14: zeigt einen Zinkenring mit runder Innenkontur für eine runde Trommel mit Zinkensegmenten gemäß Fig. 13;
- Fig. 15: zeigt einen Teilschnitt einer weiteren Ausführungsform einer Aufnahmevorrichtung;
- Fig. 16: zeigt ein erstes der in Fig. 15 dargestellten Zinkensegmente;
- Fig. 17: zeigt ein zweites der in Fig. 15 dargestellten Zinkensegmente in einer perspektivischen Schnittdarstellung;
- Fig. 18: zeigt eine weitere Ausführungsform einer Aufnahmevorrichtung, welche zum einen umlaufende Abstreifer aufweist und bei welcher Befestigungsmittel vorgesehen sind, die eine kombinierte Rast-Schraubverbindung zwischen Zinkenring und Zinkensegmenten realisieren;
- Fig. 19: zeigt einen der in Fig. 18 gezeigten Zinkenringe mit Zinkensegmenten im Moment des Aufsteckens der Zinkensegmente auf den Zinkenring;
- Fig. 20: zeigt den in Fig. 19 dargestellten Zinkenring mit vollständig aufgesteckten und durch Schrauben fixierten Zinkensegmenten;
- Fig. 21: zeigt eine weitere Ausführungsform einer Aufnahmevorrichtung, welche im Unterschied zu der in Fig. 18 dargestellten Ausführungsform Abstreifer aufweist, die die Trommel nur teilweise umschlingen;
- Fig. 22: zeigt die Aufnahmevorrichtung gemäß Fig. 21 in einer Seitenansicht (Schnittdarstellung).

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination.

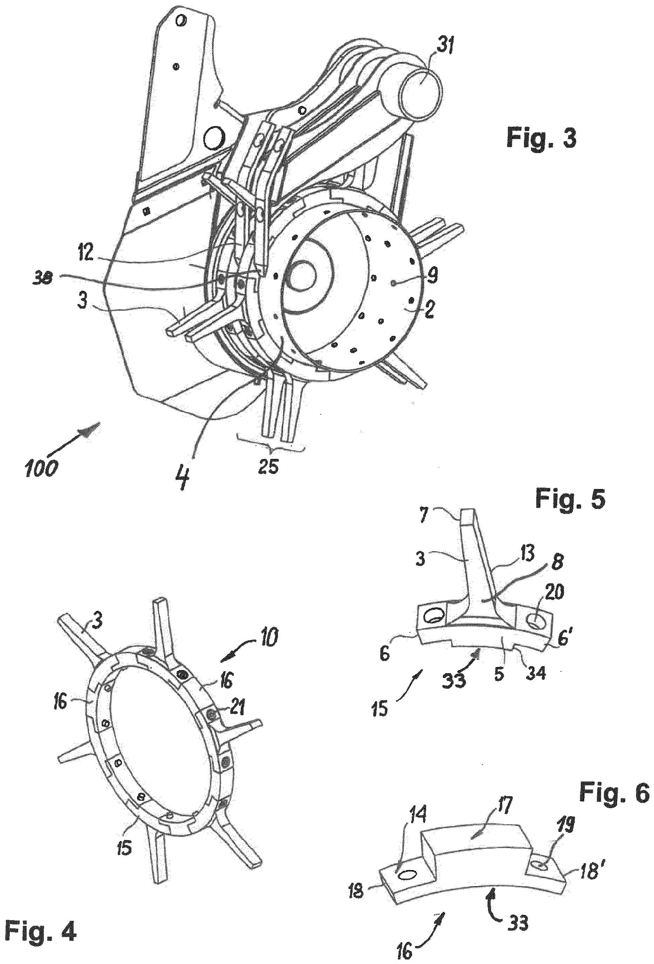

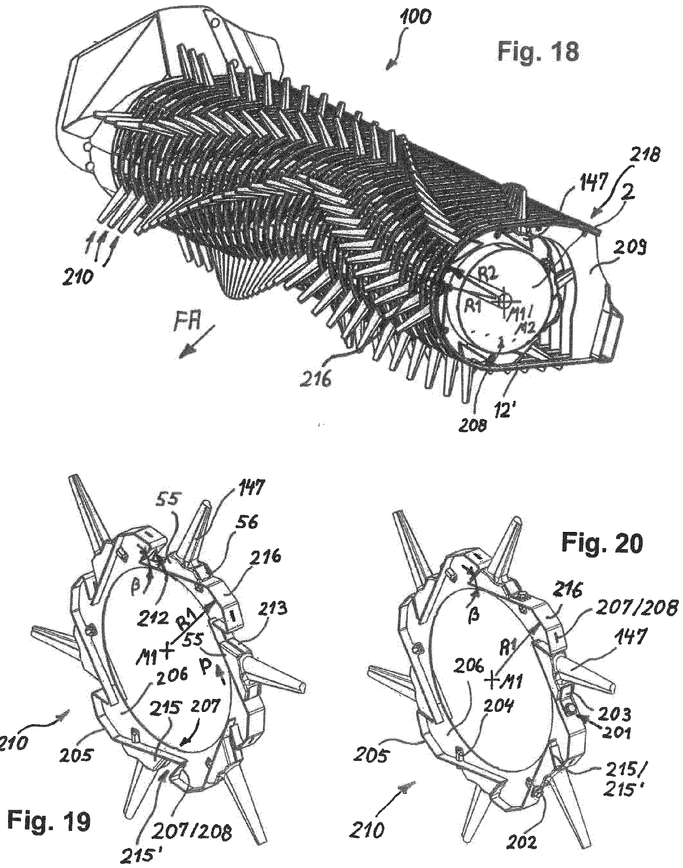

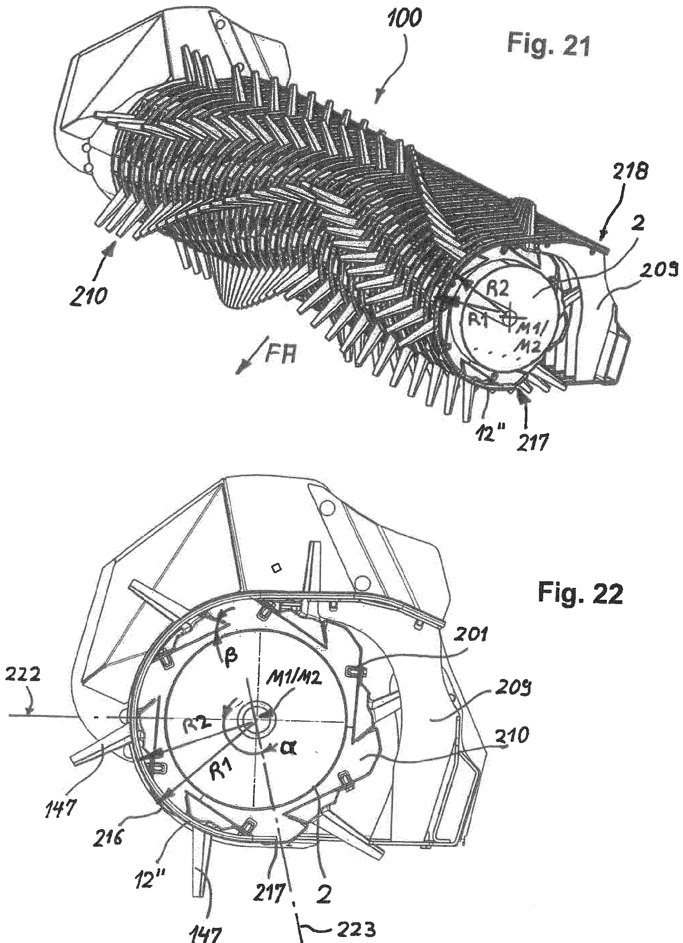

So können beispielsweise alle Ausführungsformen der erfindungsgemäßen Aufnahmevorrichtungen entweder kammförmige Abstreifer 12 aufweisen, wie sie beispielsweise in den Figuren 3, 7, 8 oder 15 dargestellt sind, oder umlaufende Abstreifer 12', wie sie in Figur 18 dargestellt sind, oder teilweise umlaufende Abstreifer 12", wie in Fig. 21 und 22 dargestellt.

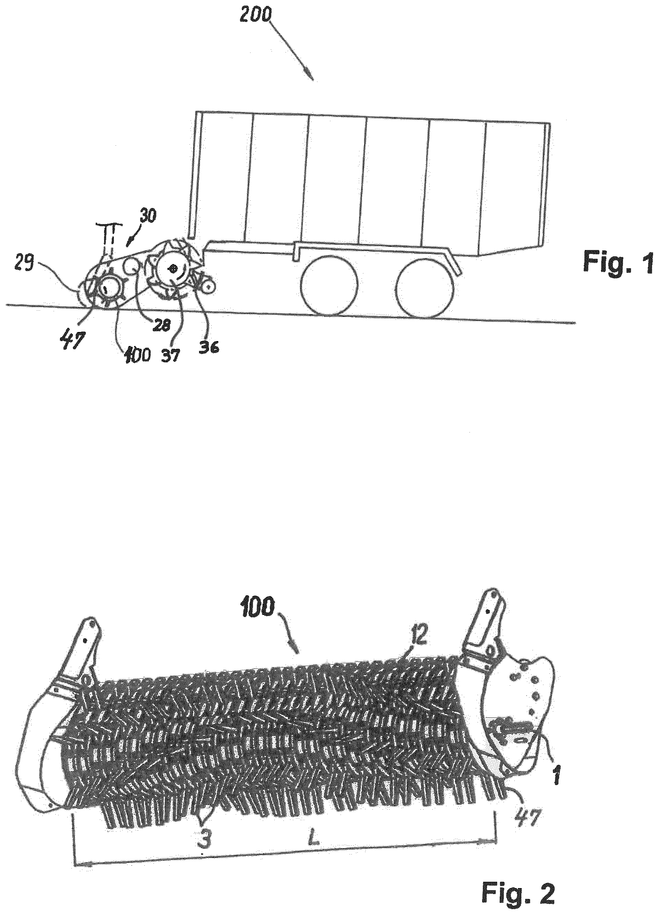

In Figur 1 ist eine landwirtschaftliche Erntemaschine 200, hier: ein Ladewagen mit einem sogenannten CFS-Ladeaggregat 30 (Continous-Flow-System) dargestellt, enthaltend eine detailliert in der Figuren 2 gezeigte Aufnahmevorrichtung 100. Ferner ist mit Bezugszahl 28 eine an sich bekannte Zuführwalze, auch CFS-Beschleunigerwalze genannt, und mit 29 ein Stützrad bezeichnet. Das CFS-Ladeaggregat 30 umfasst weiterhin eine Schneidvorrichtung 36 mit einem Förderrotor 37, einen Rollenniederhalter und Tasträder. Figur 2 zeigt die Aufnahmevorrichtung 100, die eine längliche, walzenförmige Trommel 2 mit einer Länge L umfasst und auf einer Antriebswelle 1 gelagert ist. Auf der Trommel 2 ist eine Vielzahl von Zinkensegmenten 47 angebracht. Die Zinkensegmente 47 weisen Förderzinken 3 auf, die bei rotierender Trommel 2 im Arbeitseinsatz Erntegut vom Boden aufheben und weiterfördern. Zwischen den Zinkensegmenten 47 sind Abstreifer 12 in einer kammartigen Formation angebracht. Das von den Förderzinken 3 im Ernteeinsatz aufgenommene Erntegut lagert sich im Wesentlichen auf Oberflächen 17 der Zinkenringe 10 ab und überbrückt dabei die Zwischenräume 11. Dies hat den Effekt, dass das Erntegut eine teppichartige Struktur ausbildet, die von den die Zwischenräume 11 durchlaufenden Spitzen 38 der Abstreifer 12 leicht und widerstandsarm untergriffen, angehoben und weiter gefördert werden kann.

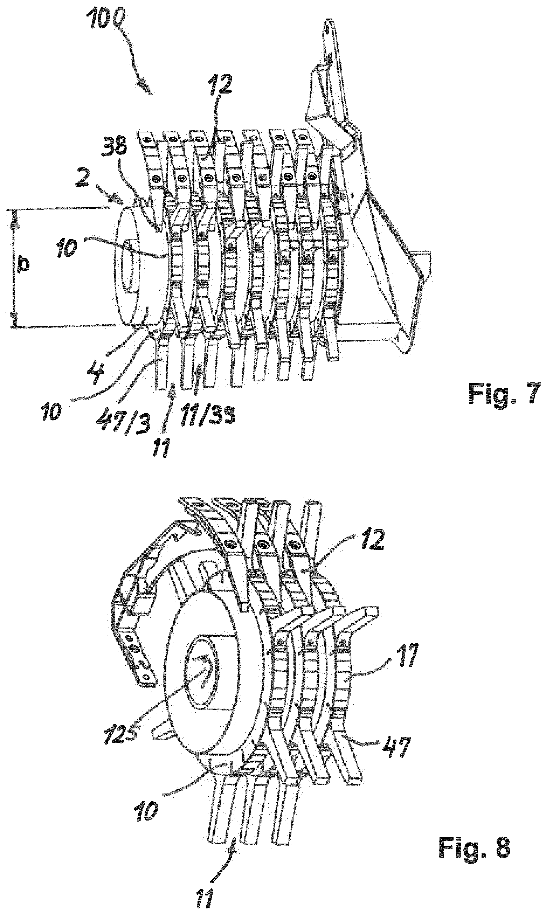

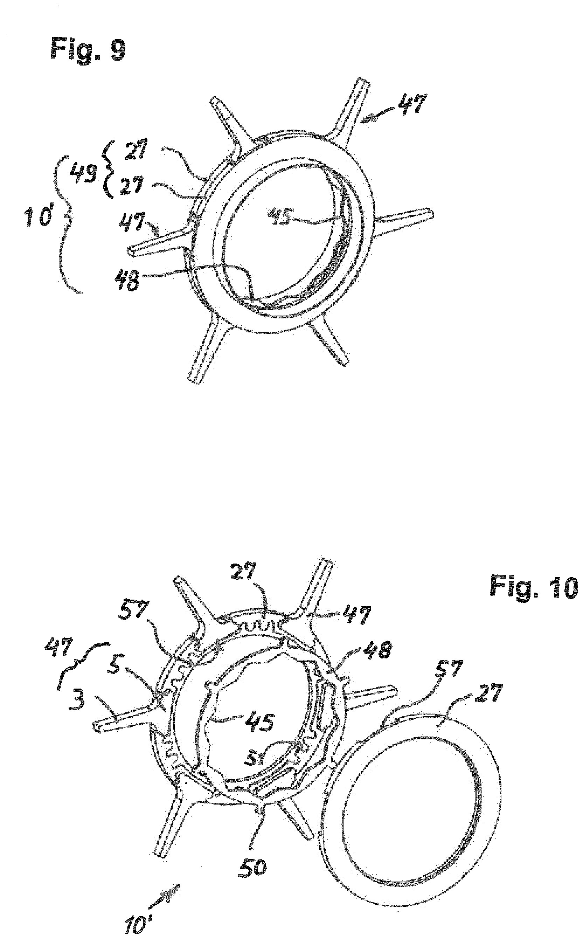

Figur 3 zeigt eine Aufnahmevorrichtung 100 in einer teilschnittartigen Darstellung. Bei dem in Fig. 3 dargestellte Ausführungsbeispiel ist die Trommel 2 rund, sie kann aber auch eine andere Kontur, insbesondere eine Vieleck-Kontur aufweisen. (vgl. Innenkontur des in Fig. 10 dargestellten Zinkenrings 10'). An der Trommel 2 sind über die Mantelfläche 4 ragende Förderzinken 3 angeordnet. Die Förderzinken 3 sind an der Trommel 2 so verteilt, dass sie mehrere nebeneinander voneinander beanstandete Zinkenringe 10 bilden, zwischen denen jeweils ein ringförmiger Zwischenraum 11 angeordnet ist. Der Zwischenraum 11 bildete eine U-förmige, kanalartige Nut 39 aus, in den die Spitze 38 des zinkenförmigen Abstreifers 12 eingreift bzw. eintaucht (vgl. Figuren 7 und 8). Die Abstreifer 12 sind kammartig an einer Welle 31 angeordnet und reichen bis an die Mantelfläche 4 der Trommel 2 heran. Alternativ zu kammartigen Abstreifern 12 können auch die Trommel 2 umschlingende Abstreifer 12' (vgl. Fig. 18) oder teilweise umlaufende Abstreifer 12" vorgesehen sein (vgl. Fig. 21 und 22).

Figur 4 zeigt einen Zinkenring 10, welcher aus einer gleichen Anzahl abwechselnd angeordneter Zinkensegmenten 15 (vgl. Fig. 5) und Zwischensegmenten 16 (vgl. Fig. 6) besteht. Weiterhin ist der Fig. 4 zu entnehmen, dass der Zinkenring 10 planparallele Seitenflächen aufweist. Durch die Parallelität der Seitenflächen wird erreicht, dass der Zwischenraum 11 zwischen benachbarten Zinkenringen 10 in seinem Querschnitt rechteckig ist und praktisch keine Freiräume zur Schmutzansammlung bildet. Der Abstreifer 12 gleitet im Arbeitseinsatz an den Seitenflächen der Zinkenringe 10 entlang und überstreicht dabei gleichzeitig die Mantelfläche 4 der Trommel 2.

Wie die Figuren 5 und 6 zeigen, weisen die Zinkensegmente 15 und die Zwischensegmente 16 eine gekrümmte Innenfläche 33 auf, die an die Kontur der Trommel 2 angepasst ist. Die Innenfläche 33 des Zinkensegments 15 geht über Abstufungen 34 in zwei Schultern 6, 6' über, an denen jeweils eine zweistufige, durchgehende Bohrung 20 eingebracht ist.

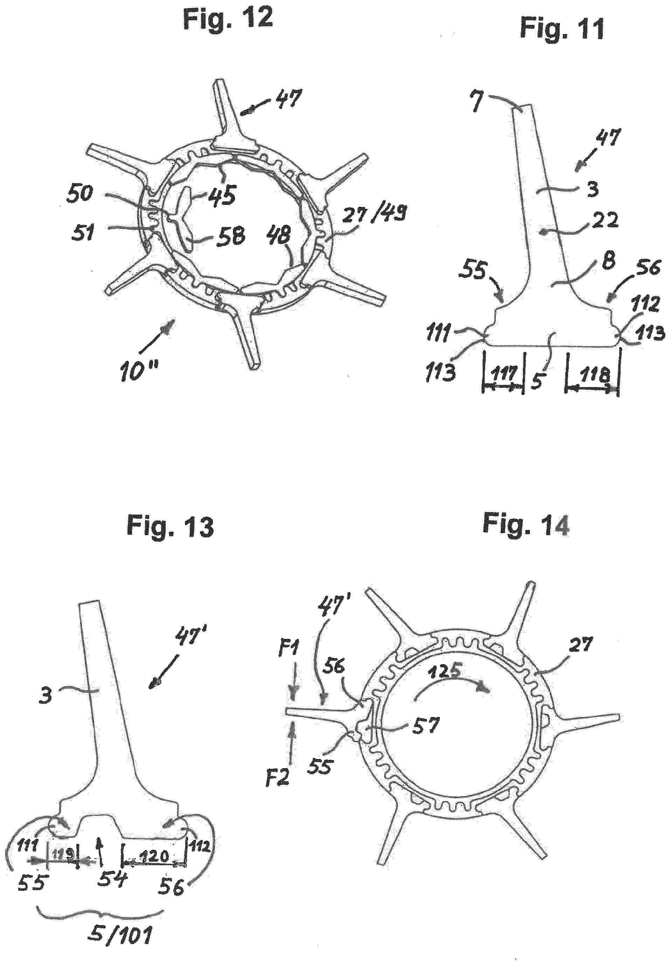

Der Sockel 5 und die Förderzinke 3 bilden ein Zinkensegment 15 des die Trommel 2 umgebenden Zinkenringes 10. Das entstandene Zinkensegment 15 besteht aus einem thermoplastischen, elastomeren Kunststoff, wie synthetischer Kautschuk, Gummi oder Harz und ist im dargestellten Ausführungsbeispiel in einem Materialstück als Formteil gefertigt. Alternativ zu der einstückigen Ausführung der Zinkensegmente 15 ist auch eine einen Sockel 5 und einen Förderzinken 3 umfassende zweistückige Ausführung möglich. Bei einer solchen Ausführung ist zwischen Förderzinke 3 und Sockel 5 eine vorzugsweise lösbare Verbindung, beispielsweise in Form einer nicht dargestellten Gewindeverbindung vorgesehen. Die Förderzinken 3 sind geneigt gegenüber dem Sockel 5 (vgl. insbesondere Fig. 14) ausgerichtet.

Das Zwischensegment 16 hat eine zum Zinkensegment 15 kompatible Form, wie sich aus den Figuren 5 und 6 ableiten lässt. Zwischensegment 16 und Zinkensegment 15 haben dieselbe Breite, so dass auch der Zinkenring 10 insgesamt eine konstante Breite aufweist. Die Kompatibilität von Zwischensegment 16 und Zinkensegment 15 sichern zwei gegenüber einer gekrümmten Oberfläche 17 des Zwischensegmentes 16 zurückversetzte Arme 18, 18'. Die Krümmung der Oberfläche 17 ist beispielsweise in Fig. 6 zu sehen. Die Arme 18, 18' weisen jeweils eine gekrümmte Auflagefläche 14 auf, an der sich die Schulter 6, 6' des Sockels 5 im zusammengesetzten Zustand des Zinkenringes 10 abstützt.

An jedem Arm 18, 18' ist eine durchgehende Bohrung 19 eingebracht, welche im zusammengesetzten Zustand des Zinkenringes 10 mit der Bohrung 20 des Sockels 5 koinzidiert. Die Bohrung 20 ist zweistufig ausgeführt, so dass eine Verschraubung mittels einer Senkkopfschraube 21, vorzugsweise mit Innensechstkant, ermöglicht ist und der Schraubenkopf im montierten Zustand die Oberfläche 17 des Zinkenrings 10 nicht überragt. Der Zinkenring 10, weist eine geschlossene Kontur mit einer im Wesentlichen konstanten Dicke d auf, aus der die Förderzinken 3 hervorragen (vgl. Fig. 4).

Zur Erleichterung der Montage können Zinkensegmente 15 und Zwischensegmente 16 auch zu Teilringen bzw. Halbringe vormontiert sein (nicht dargestellt). Die Verbindung der einzelnen Zinkensegmente 15 und Zwischensegmente 16 miteinander zu einem Teilring ist beispielsweise möglich, indem die Bohrungen 19 an den Armen 18, 18' des Zwischensegmentes 16 mit Gewinde für die Senkkopfschraube 21 versehen sind. Die Zinkensegmente 15 und Zwischensegmente 16 eines Teilrings können aber auch miteinander verklebt sein.

Wie Figuren 3 zeigt, sind bei dieser Ausführung an der Trommel 2 zahlreiche Bohrungen 9 eingebracht, welche die Austauschbarkeit der Zinkenringes 10, des Teilringes 27 oder des einzelnen Segmentes 15 erleichtern.

Die Bohrungen 9 an der Trommel 2 können mit oder ohne Gewinde ausgeführt sein. Im Falle gewindeloser Bohrungen 9 werden nur die Zinkensegmente 15 und Zwischensegmente 16 miteinander zu einem Zinkenring 10 verschraubt und die Senkkopfschrauben 21 in die Bohrungen 9 - eine formschlüssige Verbindung bildend - eingelassen.

Die Bohrungen 9 sind im dargestellten Ausführungsbeispiel wellen- bzw. spiralartig über die ganze Trommellänge L derart verteilt, dass auch die Förderzinken 3 im montierten Zustand eine wellenartige oder spiralförmige Windungslinie bzw. Kontur aufweisen (vgl. Fig. 2). Der spiralförmige Verlauf der Förderzinken 3 reduziert Lastspitzen, die bei linearer Anordnung auftreten könnten. Weiterhin hat der spiralförmige Verlauf der Förderzinken 3 eine von der Mitte nach außen gerichtete Förderwirkung. Hierdurch wird ein aufzunehmender Erntegut-Schwad, der in der Regel von der Schwadmitte zu den Seiten hin abfällt, zumindest etwas egalisiert. Nicht ausgeschlossen ist jedoch, dass die Förderzinken 3 nicht in Windungslinien, sondern linear, auf der Trommel angeordnet sind.

Es sei angemerkt, dass im dargestellten Ausführungsbeispiel nicht nur die Zinkensegmente 15, sondern auch die Zwischensegmente 16 und die zinkenförmigen Abstreifer 12 aus Kunststoff gefertigt sind.

Die Zinkensegmente 15 und die Zwischensegmente 16 sind lösbar an der Trommel 2 befestigt. Dies ermöglicht bei Bedarf ein einfaches und schnelles Auswechseln eines Zinkensegmentes 15.

Die Zinkenringe können unterschiedlich weit voneinander beabstandet sein. Es kann beispielsweise vorgesehen sein, dass der Abstand der Zinkenringe im Mittelbereich kleiner ist als im Außenbereich.

Die Aufnahmevorrichtung 100 kann alternativ zu einer runden Trommel 2 auch eine Trommel mit einer Vieleckkontur aufweisen. Bei einer Trommel mit Vieleckkontur weisen die Zinkenringe eine hierzu kompatible Innenkontur auf, die ebenfalls ein Vieleck bildet (vgl. Fig. 9, 10 und 12). Das Vieleck ist sternförmig und hat im dargestellten Beispiel zwölf nach innen und zwölf nach außen weisende Ecken. Die Trommel 2 ist aus sechs gekanteten Blechsegmenten gefertigt. Vorteil einer Trommel mit Vieleck-Kontur ist, dass hierdurch Zinkenring und Trommel formschlüssig aneinandergekoppelt werden und so eine Verdrehsicherung für die Zinkenringe ausgebildet wird.

Der in den Figuren 9 und 10 gezeigte Zinkenring 10' umfasst einen Außenring 49, der durch zwei miteinander verbundene Teilringe 27 gebildet wird. Weiterhin umfasst der Zinkenring 10' sechs Zinkensegmente 47 sowie einen Innenring 48. Die Teilringe 27 sowie die Zinkensegmente 47 sind aus Polyurethan hergestellt. Die Teilringe 27 und damit der Außenring 49 weisen Aussparungen 57 zur Aufnahme der Sockel 5 der Zinkensegmente 47 auf. Die Sockel 5 werden in den Aussparungen 57 formschlüssig aufgenommen.

Fig. 10 verdeutlicht zudem den Aufbau des aus Stahl hergestellten Innenrings 48. Der Innenring 48 weist eine Vieleckkontur 45 auf, die zur Vieleckkontur einer Vielecktrommel kompatible ist. Weiterhin weist der Innenring 48 nasenartige Konturelemente 50 auf, die in kompatible Konturelemente 51 des Außenringes 49 eingreifen können. Im dargestellten Ausführungsbeispiel sind zwischen jeweils zwei Aussparungen 57 jeweils drei Konturelemente 51 vorgesehen. Dadurch kann der Innenring 48 relativ zum Außenring 49 in drei verschiedenen Stellungen angebracht werden. Selbstverständlich sind auch andere Teilungen möglich.

Die Position der Förderzinken 3 gegenüber der Trommel 2 kann somit zum einen dadurch variiert werden, dass der Zinkenring 10', bzw. dessen Vieleckprofil 45, durch schrittweises Drehen vor der Montage zunächst in eine gewünschte Position gegenüber der Trommel 2 ausgerichtet wird. Diese Variationsmöglichkeit wird weiterhin vervielfacht, indem zudem die Lage des Innenrings 48 gegenüber dem Außenring 49 mittels der Konturelemente 50, 51 variabel ist. Die beschriebenen Ausrichtoptionen ermöglichen die Anordnung der Förderzinken 3 auf der Trommel 2 in einer Vielzahl von Positionen. Wie bereits weiter oben erläutert, können die Förderzinken 3 auf der Trommel 2 zu Windungslinien ausgerichtet und so individuellen Anforderungen angepasst werden.

Der in den Figuren 9 und 10 gezeigte Innenring 48 kann unlösbar, beispielsweise durch Einkleben oder Eingießen, mit dem Außenring 49 verbunden sein. Alternativ dazu ist es auch möglich, den Außenring 49, der eine gewisse Elastizität aufweist, ähnlich einer Verbindung zwischen Reifen und Felge auf den im Wesentlichen starren Innenring 48 aufzuziehen. Um diese Montagearbeit zu erleichtern, kann vorgesehen sein, dass der Innenring 48 nicht einstückig ausgebildet ist, sondern eine Anzahl von Teilsegmenten 58 umfasst. Bei dem in Fig. 12 dargestellten Ausführungsbeispiel sind sechs Teilsegmente 58 vorgesehen, die ohne Verformung des Außenringes 49 an die vorgesehen Position montierbar sind. Nachdem ein solcher Zinkenring 10' auf einer Trommel 2 montiert ist, stützen die Teilsegmente sich sowohl in der dafür vorgesehen Kontur des Außenringes als auch - nach innen hin - gegen die Trommel 2 ab und werden so sicher fixiert.

Bei dem in den Fig. 9 und 10 dargestellten Ausführungsbeispiel sind die Zinkensegmente 47 in Zinkenringe 10 weitgehend formschlüssig eingesetzt. Der Innendurchmesser der Zinkenringe 10 ist an den Außendurchmesser der Trommel 2 angepasst. Bei dem in den Figuren 9 und 10 dargestellten Ausführungsbeispiel ist eine Trommel 2 mit kreisrunder Mantelfläche 4 vorgesehen. Um eine Verdrehung der Zinkenringe 10 gegenüber der Trommel 2 zu verhindern sind die Zinkenringe 10 mit der Trommel 2 verschweißt. Selbstverständlich sind auch andere Verdrehsicherungen möglich, beispielsweise eine Schraubverbindung oder eine Trommel mit einer Vieleck-Mantelfläche in Kombination mit Zinkenringen mit Vieleck-Innenflächen (vgl. Fig. 9, Innenring 48). Die Zinkenringe 10 weisen eine geschlossene Kontur mit einer im Wesentlichen konstanten Dicke auf, aus der die Förderzinken 3 hervorragen.

Figur 11 zeigt ein Zinkensegment 47 im Detail. Das Zinkensegment 47 umfasst einen Sockel 5 und einen Förderzinken 3. Die Förderzinken 3 können unterschiedlich ausgeführt sein. Im dargestellten Ausführungsbeispielen weist die Förderzinke 3 eine abgestumpfte Spitze 7 und eine der Spitze 7 abgewandte Zinkenbasis 8 auf, welche wiederum in den Sockel 5 übergeht. Die Förderzinke 3 hat die Form eines sich in Richtung Spitze 7 verjüngenden, abgestumpften Obelisken 13 mit zwei sich gegenüber liegenden, zueinander parallel angeordneten Seitenflächen 22. Alternativ hierzu kann die Förderzinke aber auch eine andere, beispielsweise runde oder ovale, vorzugsweise sich konisch zur Zinkenspitze hin verjüngende, Form aufweisen.

Der Sockel 5 bildet einen Befestigungsbereich 101 aus, der zwei Ausleger 55 und 56 umfasst. Der Ausleger 55 wird durch den Teil des Sockels 5 ausgebildet, der die Zinkenbasis 8 zur einen Seite hin überragt, der Ausleger 56 wird dementsprechend durch den Teil des Sockels 5 ausgebildet, der die Zinkenbasis zur anderen Seite hin überragt. Der Ausleger 55 hat somit eine Länge 117 und der Ausleger 56 eine Länge 118.

An den Auslegern 55, 56 sind Rastelemente 111 und 112 angebracht. Die Rastelemente 111, 112 weisen eine Rundung 113 auf, die dazu vorgesehen ist, in eine zur Rundung kompatiblen Vertiefung einer im Zinkenring 10, 10' oder 10" vorgesehenen Nut 54 einzugreifen.

Die Zinkensegmente 47 im Zinkenring 10 sind austauschbar. Das heißt: ein beschädigtes oder verschlissenes Zinkensegment 47 kann bei Bedarf aus dem Zinkenring 10 entnommen und durch ein neues Zinkensegment 47 ersetzt werden. Im Arbeitseinsatz, das heißt, bei Förderung von Erntegut in Arbeits-Drehrichtung 125, werden die Förderzinken 3 in einer Richtung F1 belastet (vgl. Fig. 14). Der Sockel 5 ist so konzipiert, dass er sich bei Einwirken einer Kraft in Richtung F1 gegen den Zinkenring 10 abstützt und nicht aus der Aussparung 57 herausgedrückt werden kann. Bei umgekehrter Krafteinwirkung in Richtung F2 ermöglicht die Elastizität des Sockelmaterials eine Verformung, die ausreicht, um das Zinkensegment 47 zu demontieren bzw. auszutauschen.

Figur 12 zeigt sechs Zinkensegmente 47, die in einen Zinkenring 10" eingesetzt sind. Der Zinkenring 10" weist, analog zum Zinkenring 10', einen Innenring 48 mit einer Vieleckkontur 45 auf, jedoch ist der Innenring 48 nicht einstückig, sondern besteht aus Teilsegmenten 58. Innenring 48 und Außenring 49 sind über nasenartige Konturelemente 50, 51 formschlüssig miteinander verbunden.

Eine verbesserte Austauschbarkeit wird durch den Einsatz von Zinkensegmenten 47' erreicht (vgl. Fig. 13 und 14). Die Zinkensegmente 47' weisen ebenfalls Rastelemente 111 und 112 mit Rundungen 113 auf. Im Unterschied zu den Zinkensegmenten 47 weisen die Zinkensegmente 47' an der Unterseite des Sockels 5 eine Nut 54 auf, die den Sockel in die beiden Ausleger 55 und 56 unterteilt. Bei einem Zinkensegment mit Nut 54 reichen die Ausleger 55 und 56 also jeweils von der Nut 54 bis an die Außenkante des Sockels 5. Der Ausleger 55 weist eine Länge 119 auf und ist kürzer als der Ausleger 56 mit einer Länge 120. Der Ausleger 55 ist somit relativ schmal und dementsprechend leicht verformbar. Im Arbeitseinsatz, also bei Rotation der Trommel 2 in Arbeits-Drehrichtung 125, wirkt auf die Zinkensegmente 47' die durch das Erntegut ausgeübte Kraft F1. Bei Einwirken der Kraft F1 verformt sich der in der Nut 54 aufgenommene Sockel 5 nicht, sondern wird vielmehr sicher gehalten. Bei entgegengesetzter Krafteinwirkung, nämlich in Richtung F2, kann eine Verformung des Auslegers 55 in Richtung der Nut 54 stattfinden und die Rastverbindung gelöst werden. Das Zinkensegment 47' kann so in die Aussparung 57 nach Art einer Klick-Verbindung eingesetzt und bei Bedarf wieder entnommen werden.

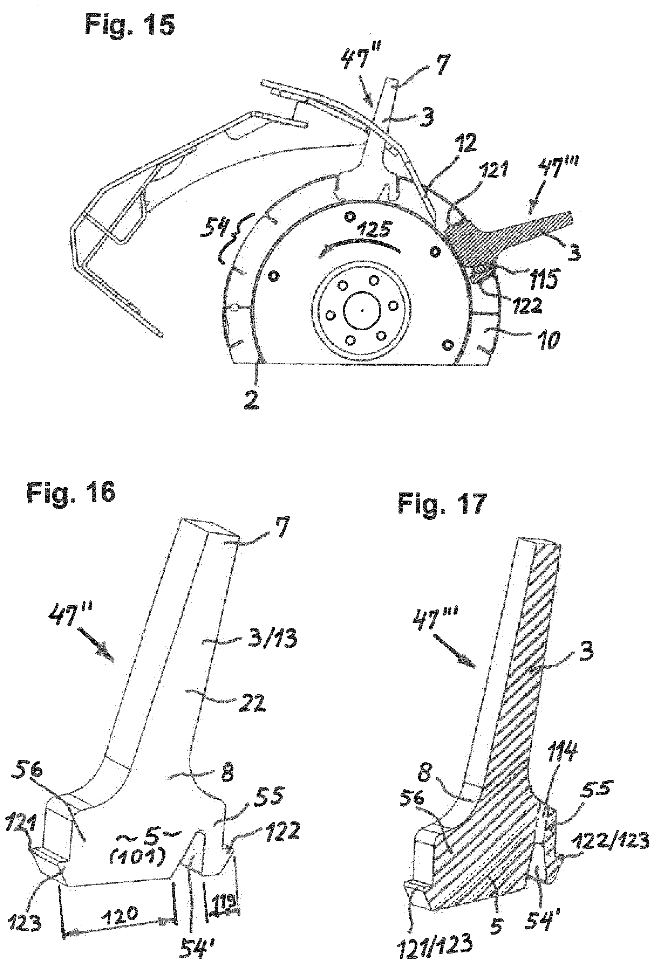

Figur 15 zeigt in einer vereinfachten Darstellung eine Trommel 2 mit einem Zinkenring 10 in einer Schnittdarstellung. Zur besseren Veranschaulichung ist eine Nut 54 ohne eingesetztes Zinkensegment gezeigt, in einer zweiten Nut 54 ist ein Zinkensegment 47" eingesetzt und in einer dritten Aussparung ein Zinkensegment 47'''.

Der prinzipielle Aufbau und die Funktionsweise der Zinkensegmente 47" und 47''' entsprechen dem Aufbau und der Funktionsweise der Zinkensegmente 47 und 47'. Die Zinkensegmente 47, 47', 47" und 47''' sind aus einem thermoplastischen, elastomeren Kunststoff, wie synthetischer Kautschuk, Gummi oder Harz in einem Materialstück als Formteil gefertigt. Die Förderzinken 3 sind geneigt gegenüber dem Sockel 5 ausgerichtet. Die Zinkensegmente 47, 47', 47" und 47''' sind auf der Aufnahmevorrichtung 100 so angeordnet, dass die Spitzen 7 im Arbeitseinsatz, das, heißt bei Rotation der Trommel 2 in Arbeits-Drehrichtung 125, nachlaufend sind.

Alternativ zu der dargestellten, einstückigen, Ausführung der Zinkensegmente 47, 47', 47" und 47''' kann auch eine einen Sockel 5 und einen Förderzinken 3 umfassende zweistückige Ausführung vorgesehen sein (nicht dargestellt). Bei einer solchen Ausführung ist zwischen Förderzinke 3 und Sockel 5 eine vorzugsweise lösbare Verbindung, beispielsweise in Form einer Gewindeverbindung vorgesehen.

Figur 16 zeigt Das Zinkensegment 47", das im Unterschied zum Zinkensegment 47' eine keilförmige Nut 54' und mit Zacken 123 versehen Rastelemente 121 und 122 aufweist. Durch die geometrische Gestaltung und Anordnung von Nut 54, 54' bzw. der Rastelemente 111, 112, 121 und 122 kann die Ansprechschwelle, also die Größe des Kraftbedarfs, der erforderlich ist, um die Rastverbindung zu lösen, bedarfsweise eingestellt werden. Insbesondere können in Abhängigkeit von der Kraftrichtung zwei unterschiedliche Ansprechschwellen vordefiniert werden, um bei Krafteinwirkung in die eine Richtung (Arbeitseinsatz) das Zinkensegment sicher zu halten und bei Krafteiwirkung in die andere Richtung (Wartung / Demontage) das Zinkensegment leicht ein- und ausbauen zu können.

Figur 17 zeigt eine weitere Ausführungsform eines Zinkensegmentes 47'''. Das Zinkensegment 47''' weist eine Bohrung 114 auf, die von der Oberseite des Sockels 5, also von der Seite des Sockels, aus der der Förderzinken 3 hervorragt, ausgeht und bis in die Nut 54' reicht. Analog zum bereits beschriebenen Aus- und Einbau kann auch das Zinkensegment 47''' ein- und ausgebaut werden. Im eingebauten Zustand kann jedoch durch die Bohrung 114 ein Stopfen 115 in die Nut eingeführt werden (vgl. Fig. 15). Der in die Nut 54' eingeführte Stopfen blockiert den durch die Nut ausgebildeten Freiraum und verhindert so die Demontage auch bei Krafteinwirkung in Richtung F2.

Eine solche Blockade ist dann erforderlich, wenn nicht ausgeschlossen werden kann, dass unter bestimmten Bedingungen auch im Arbeitseinsatz eine in Richtung F2 wirkende Kraft auf die Zinkensegmente ausgeübt wird. Solche Anwendungsfälle können beispielsweise auftreten, wenn die Drehrichtung der Pick-up-Trommel reversiert wird um beispielsweise eine Verstopfung zu beseitigen. Weiterhin können insbesondere beim Einsatz der erfindungsgemäßen Zinkensegmente an einer Ladewagen-Aufnahmevorrichtung Fälle auftreten, bei denen die Zugmaschine und der angehängte Ladewagen zur Entladung rückwärts an ein Erntegut-Vorratslager (Silo) heranfahren und bei einer solchen Rückwärtsfahrt die Zinkensegmente durch auf dem Boden liegendes Erntegut entgegen der üblichen Lastrichtung belastet werden.

Bei dem Stopfen 115 kann es sich um einen zylindrischen Dübel handeln, beispielsweise aus einem Kunststoffmaterial. Besonders bevorzug wird jedoch ein Stopfen mit Gewinde, insbesondere eine Schraube oder ein Gewindestift mit einem Innensechskant. Ein Innengewinde in der Bohrung 114 kann zwar vorgesehen sein, ist jedoch nicht unbedingt erforderlich, da die Schraube oder der Gewindestift bei geeigneter Dimensionierung des Durchmessers der Bohrung 114 einfach in die Bohrung 114 eingeschlagen werden kann. Zur Demontage kann die Schraube oder der Gewindestift mit einem geeigneten Werkzeug aus dem Zinkensegment herausgedreht werden. Da das Schrauben- bzw. Gewindestiftmaterial härter ist als das für das Zinkensegmente gewählte Kunststoffmaterial, schneidet das auf der Schraube bzw. dem Gewindestift vorhandene Gewinde sich beim Herausdrehen einen eigenen Gewindegang.

Figur 18 zeigt eine weitere Ausführungsform einer Aufnahmevorrichtung mit umlaufenden Abstreifern 12', Die Abstreifer sind mit ihrem einen Ende oberhalb der Trommel am Rahme 209 befestigt und mit ihrem andern Ende unterhalb der Trommel 2. Auf der Trommel 2 sind Zinkenringe 210 mit darin eingesetzten Zinkensegmenten 147 angeordnet. Zwischen Zinkenring 210 und Zinkensegment 147 sind Befestigungsmittel vorgesehen sind, die eine kombinierte Rast-Schraubverbindung realisieren. Die Zinkenringe 210 sind als Blechkonstruktion gefertigt und auf die Trommel 2 aufgeschweißt. Die Zinkenringe 210 umfassen senkrecht zur Trommel 2 angebrachte Stützbleche 206 sowie T-förmig aufgelegte Trägerbleche 205 (vgl. Fig. 19). Zur Erleichterung der Positionierung von Trommel 2, Trägerblech 205 und Stützblech 206 sind an diesen Einzelteilen Konturelemente in Form von Aussparungen 208 und Vorsprüngen 207 vorgesehen. So weisen die Stützbleche 206 Vorsprünge 207 auf, die vor dem Anschweißen in dafür vorgesehene Aussparungen 208 in der Trommel 2 einsetzbar sind. Auch die Trägerbleche 205 weisen Aussparungen 208 auf, die im dargestellten Ausführungsbeispiel schlitzartig sind und durch die entsprechende an den Stützblechen 206 angeordnete Vorsprünge 207 greifen.

Die Zinkensegmente 147 sind lösbar auf den Trägerblechen 205 angebracht (vgl. Fig. 19). Zwischen den Zinkenringen 147 befinden sich umlaufende Abstreifer 12', die von einem Rahmen 209 gehalten werden. Die Abstreifer 12' bilden im in Fahrtrichtung FA gesehen vorderen Teil der Trommel 2 über einen Winkel von etwa 180° eine die Trommel halbkreisförmig umschlingende Kontur mit einem äußeren Radius R2 aus. Der Radius R2 ist kleiner als der äußere Radius R1 der Zinkenringe, der durch die Trägerbleche 205, bzw. deren Oberflächen 216, gebildet wird. Die Oberflächen 216 überragen somit die Abstreifer 12' in dem Bereich, in dem die Abstreifer 12' die Trommel 2 halbkreisförmig umschlingen, das heißt: im in Fahrtrichtung FA gesehen vorderen Bereich der Trommel 2. Im Ernteeinsatz trifft der Erntegut-Strom somit zunächst auf die Oberflächen 216 der sich drehenden Zinkenringe 210 und wird hierdurch mitgenommen. Auch bei dieser Ausführungsform mit umlaufenden Abstreifern 12' bilden die Zinkenringe 147 den Trommeldurchmesser D überragende Konturen aus, auf die sich das Erntegut im Arbeitseinsatz teppichartig auflegt. Analog zu den kammförmig angebrachten Abstreifern (vgl. Fig. 3 und Fig. 7) untergreifen auch die umlaufenden Abstreifer 147 sowie die teilweise umlaufenden Abstreifer 12" (vgl. Fig. 21) das Erntegut und leiten es widerstandsarm weiter.

Figur 19 und 20 zeigen einen der in Fig. 18 gezeigten Zinkenringe 210 mit Zinkensegmenten 147. Die Zinkensegmente 147 umfassen zwei Ausleger 55 und 56. Der Ausleger 55 hat eine keilförmige Kontur 215, die in eine durch die Trägerbleche 205 ausgebildete ebenfalls keilförmige Kontur 215' einschiebbar ist. Der Ausleger 55 und die keilförmige Kontur 215 des Trägerblechs 205 weisen somit denselben Winkel β auf. Der Ausleger 56 weist ebenfalls eine keilförmige Kontur auf. Wie Figur 20 zeigt dient der Ausleger 56 als Auflage für ein Halteblech 203, das mit einer Schraube 202 und einer Mutter 204 fixiert wird. An Stelle von Schraube 202 und Mutter 204 können auch andere demontierbare Befestigungsmittel vorgesehen sein. Die Montage eines Zinkensegments 147 erfolgt somit, indem das Zinkensegment 147 zunächst in Richtung P (vgl. Fig. 19) in die keilförmige Aussparung 215 eingeschoben wird. Die Endposition ist erreicht, wenn der Ausleger 55 das Trägerblech 205 kontaktiert und nicht weiter in die keilförmige Aussparung 215' einschiebbar ist. Zur Fixierung dieser Position wird dann das Halteblech 203 aufgelegt und mit der Schraube 202 fixiert. Figur 20 zeigt den Zinkenring 210 mit den in Endposition befindlichen und dort fixierten Zinkensegmenten 147.

Wie Figur 19 zeigt weist das Zinkensegment 147 an seinem Ausleger 55 zudem einen Schlitz 213 auf, der auf eine Nase 212 aufschiebbar ist. Die Nase 212 wird gebildet durch einen Überstand des Stützbleches 206, welcher durch einen Schlitz des Trägerblechs 205 hindurchragt. Die im montierten Zustand innerhalb des Schlitzes 213 befindliche Nase 212 blockiert die Bewegungsmöglichkeit des Zinkensegments 147 in Querrichtung und verhindert so ein Ausbrechen des Zinkensegmentes bei etwaig auftretenden Querkräften.

Figur 21 zeigt eine weitere Ausführungsform einer Aufnahmevorrichtung 100. Diese Aufnahmevorrichtung 100 umfasst Abstreifer 12", die die Trommel 2 teilweise umschlingen. Die Abstreifer 12" sind im Bereich ihres Anfangs 218 mit dem Rahmen 209 fest verbunden. Ausgehend vom Anfang 218 umschlingen sie die Trommel 2 und laufen in einem freien Ende 217 aus. Analog zu dem in Figur 18 dargestellten Beispiel hat der Zinkenring 210 im in Fahrtrichtung FA gesehen vorderen Bereich der Aufnahmevorrichtung 100 einen vom Mittelpunkt M1 zur Oberfläche 216 reichenden Radius R1, der größer ist, als der Radius R2 der Abstreifer. Auch hier wird das Erntegut somit vom Überstand des Zinkenringes 210 gegenüber dem Abstreifer 12" erfasst, beschleunigt und widerstandsarm weitergefördert.

Bezogen auf eine waagerechte Ebene 222, die durch die Mittelpunkte M1 der Zinkenringe 210 und M2 der Abstreifer 12" definiert wird, umschlingt der Abstreifer 12" die Trommel 2 im dargestellten Ausführungsbeispiel um einen Winkel α von ca. 100°. Selbstverständlich sind auch andere Umschlingungswinkel möglich. Besonders bevorzugt wird ein Bereich, bei dem eine Gerade, die durch den Mittelpunkt M1 des Zinkenrings 210 sowie das Ende 217 definiert ist, einen Winkel von 70° bis 120° gegenüber der waagerechten Ebene 222 einschließt.

Insgesamt ermöglichen die in den Figuren 18 bis 22 dargestellte beiden Ausführungsformen ein einfaches Wechseln einzelner Zinkensegmente 147 indem zur Montage lediglich eine einzige Schraube 202 gelöst bzw. angeschraubt werden muss. Die Montage kann erfolgen, ohne das die Abstreifer 12' bzw. 12" oder die Zinkenringe 210 gelöst werden müssen.

### Bezugszeichenliste

- 1: Antriebswelle
- 2: Trommel
- 3: Förderzinke
- 4: Mantelfläche (von 2)
- 5: Sockel
- 6, 6': Schulter
- 7: Spitze (von 3)
- 8: Zinkenbasis
- 9: Bohrung
- 10, 10', 10": Zinken-Ring
- 11: Zwischenraum
- 12; 12', 12": Abstreifer
- 13: Obelisk
- 14: Auflagefläche
- 15: Zinkensegment
- 16: Zwischensegment
- 17: Oberfläche
- 18, 18': Arm (von 16)
- 19: Bohrung
- 20: Bohrung (zweistufig)-
- 21: Senkkopfschraube
- 22: Seitenfläche
- 23: -
- 24: -
- 25: -
- 26: -
- 27: Teilring
- 28: Zuführwalze
- 29: Stützrad
- 30: CFS-Ladeaggregat
- 31: Welle
- 32: -
- 33: Innenfläche
- 34: Abstufung-
- 35: -
- 36: Schneidvorrichtung
- 37: Förderrotor
- 38: Spitze (von 12)
- 39: Nut
- 40: -
- 41: -
- 42: -
- 43: -
- 44: -
- 45: Vieleckkontur
- 46: -
- 47, 47', 47", 47''': Zinkensegment
- 48: Innenring
- 49: Außenring
- 50: Konturelement (von 48)
- 51: Konturelement (von 49)
- 52: -
- 53: -
- 54, 54': Nut
- 55: Ausleger
- 56: Ausleger
- 57: Aussparung
- 58: Teilsegment
- 100: Aufnahmevorrichtung
- 101: Befestigungsbereich
- 111: Rastelement
- 112: Rastelement
- 113: Rundung
- 114: Bohrung
- 115: Stopfen
- 116: -
- 117: Länge
- 118: Länge
- 119: Länge
- 120: Länge
- 121: Rastelement
- 122: Rastelement
- 123: Zacke
- 124: -
- 125: Arbeits-Drehrichtung
- 147: Zinkensegment
- 200: Erntemaschine
- 201: Schraubverbindung
- 202: Schraube
- 203: Halteblech
- 204: Mutter
- 205: Trägerblech
- 206: Stützblech
- 207: Vorsprung (an 206)
- 208: Aussparung
- 209: Rahmen
- 210: Zinkenring
- 211: -
- 212: Nase
- 213: Schlitz
- 214: Aufnahme (für 147)
- 215, 215': Kontur
- 216: Oberfläche (von 205)
- 217: Ende (von 12")
- 218: Anfang (von 12")
- 219: waagerechte Gerade (durch M1, M2)
- 220: Gerade (durch M1, M2 und 217)

- L: Trommellänge
- F1: Kraft - Richtung
- F2: Kraft - Richtung
- FA: Fahrtrichtung
- D: Außendurchmesser (von 2)
- P: Richtung
- β: Winkel
- α: Winkel
- M1: Mittelpunkt (von 210)
- M2: Mittelpunkt (der Abstreifer)
- R1: Radius (von 210)
- R2: Radius (von 12', 12")

## Patentansprüche

1. Drehbare Aufnahmevorrichtung (100) für eine landwirtschaftliche Erntemaschine (200) zur Aufnahme von Erntegut, umfassend:
- eine walzenförmige Trommel (2) mit einer äußeren Mantelfläche (4), die einen Außendurchmesser (D) aufweist,
- eine Vielzahl von auf der äußeren Mantelfläche (4) der Trommel (2) angeordneten und den Außendurchmesser (D) der Trommel (2) überragenden Zinken-Ringen (10; 10'; 10"; 210),
- wobei zwischen sich benachbarten Zinken-Ringen (10; 10'; 10"; 210) Zwischenräume (11) vorgesehen sind, welche Abstreifer (12; 12'; 12") aufnehmen,
- und wobei die Zinkenringe (10; 10'; 10"; 210) Zinkensegmente (15; 47; 47'; 47"; 47'''; 147) umfassen, die im montierten Zustand vollständig oberhalb der Mantelfläche (4) angeordnet sind und aus einem elastischen Kunststoff gefertigt sind,
- die Zinkenringe (10; 10'; 10"; 210) und die Zinkensegmente (15; 47; 47'; 47"; 47'''; 147) zueinander komplementäre Befestigungsmittel umfassen mittels derer die Zinkensegmente (15; 47; 47'; 47"; 47'''; 147) ohne Demontage des Zinkenringes (10; 10'; 10"; 210) an den Zinkenring (10; 10'; 10"; 210) montiert sind,
**dadurch gekennzeichnet, dass** der Zinkenring (10; 10'; 10"; 210) einen Radius (R1) aufweist, der größer ist als ein Radius (R2) des Abstreifers (12; 12'; 12") im in Fahrtrichtung (FA) gesehen vorderen Bereich der Aufnahmevorrichtung (100), so dass bei im Arbeitseinsatz befindlicher Aufnahmevorrichtung (100) das aufzunehmende Erntegut zunächst den sich drehenden Zinkenring (10; 10'; 10";210) kontaktiert und von diesem mitgenommen wird bevor es den Abstreifer (12; 12'; 12") kontaktiert.

2. Aufnahmevorrichtung (100) nach Anspruch 1, **dadurch gekennzeichnet, dass** mittels der Befestigungsmittel eine Schraubverbindung, eine Rastverbindung oder eine kombinierte Rast-Schraubverbindung von Zinkenring (10; 10'; 10"; 210) und Zinkensegment (15; 47; 47'; 47"; 47'''; 147) hergestellt ist.

3. Aufnahmevorrichtung (100) nach einem der Ansprüche 1 oder 2, **dadurch gekennzeichnet, dass** der Zinkenring (210) Stützbleche (206) und Trägerbleche (205) umfasst, wobei die Stützbleche (206) gegenüber der Trommel (2) senkrecht angeordnet sind und gemeinsam mit den Trägerblechen (205) eine die Trommel (2) überragende T-förmige Kontur ausbilden.

4. Aufnahmevorrichtung (100) nach einem der Ansprüche 1 bis 3, **dadurch gekennzeichnet, dass** der Zinkenring (210) eine ringförmige Kontur mit keilförmigen Aufnahmen für die Zinkensegmente (147) ausbildet.

5. Aufnahmevorrichtung nach einem der Ansprüche 1 bis 4, **dadurch gekennzeichnet, dass** die Abstreifer (12")
- einen Anfang (218) und ein freies Ende (217) aufweisen,
- einseitig im Bereich ihres Anfangs (218) direkt oder mittels verbindender Bauteile an einen Rahmen (209) der Aufnahmevorrichtung gekoppelt sind
- die Trommel (2) mindestens so weit umschlingen, dass die Enden (217) eine durch die Mittelpunkte (M1) der Zinkenringe (210) definierte waagerechte Ebene (222) durchschneiden.

6. Aufnahmevorrichtung nach Anspruch 5, **dadurch gekennzeichnet, dass** das Ende (217) der Abstreifer (12") die Trommel 2 ausgehend von der waagerechten Ebene (222) um einen Winkel (a) umschlingt, der 0° bis 160° beträgt.

7. Aufnahmevorrichtung nach einem der Ansprüche 1 bis 6, **dadurch gekennzeichnet, dass**
- das Zinkensegment (147) aus einem elastischen Kunststoff-Material hergestellt ist,
- einen Sockel (5) mit einem Befestigungsbereich (101) zur Verbindung des Zinkensegments (147) mit dem Zinkenring (210) und wenigstens einen aus dem Sockel (5) hervortretenden Förderzinken (3) umfasst,
- mittels einer Rast- und/oder Schraubverbindung ohne Demontage des Zinkenringes (210) am Zinkenring (210) montiert ist und
- das Zinkensegment (147) einen Schlitz (213) umfasst, der auf eine am Zinkenring (210) vorgesehenen Nase (212) aufgesteckt ist, so dass zwischen Zinkensegment (147) und Zinkenring (210) eine formschlüssige Verbindung hergestellt ist.

8. Erntemaschine (200) für Halm- und Blattgut oder Heuwerbemaschine, umfassend eine Aufnahmevorrichtung (100) nach einem der Ansprüche 1 bis 7.

## Claims

1. A rotatable pick-up device (100) for an agricultural harvesting machine (200) for receiving harvested crop, comprising:
- a roller-shaped drum (2) with an outer lateral surface (4) which has an outside diameter (D),
- a multiplicity of tine rings (10; 10'; 10"; 210) which are arranged on the outer lateral surface (4) of the drum (2) and protrude over the outside diameter (D) of the drum (2),
- wherein between adjacent tine rings (10; 10'; 10"; 210) intermediate spaces (11) are provided which receive strippers (12; 12'; 12"),
- and wherein the tine rings (10; 10'; 10"; 210) comprise tine segments (15; 47; 47'; 47"; 47"'; 147) which, in the mounted state, are arranged entirely above the lateral surface (4) and are manufactured from an elastic plastic,
- the tine rings (10; 10'; 10"; 210) and the tine segments (15; 47; 47'; 47"; 47'''; 147) comprise mutually complementary fastening means, by means of which the tine segments (15; 47; 47'; 47"; 47'''; 147) are mounted on the tine ring (10; 10'; 10"; 210) without the tine ring (10; 10'; 10"; 210) being removed,
**characterized in that**
the tine ring (10; 10'; 10"; 210) has a radius (R1) which is greater than a radius (R2) of the stripper (12; 12'; 12") in the front region of the pick-up device (100), as seen in the direction of travel (FA), and therefore, when the pick-up device (100) is in working use, the harvested crop to be picked up first of all makes contact with the rotating tine ring (10; 10'; 10"; 210) and is carried along by the latter before said harvested crop makes contact with the stripper (12; 12'; 12").

2. The pick-up device (100) as claimed in claim 1, **characterized in that** a screw connection, a latching connection or a combined latching/screw connection of tine ring (10; 10'; 10"; 210) and tine segment (15; 47; 47'; 47"; 47'''; 147) is produced by means of the fastening means.

3. The pick-up device (100) as claimed in one of claims 1 to 2, **characterized in that** the tine ring (210) comprises support plates (206) and carrier plates (205), wherein the support plates (206) are arranged perpendicularly in relation to the drum (2) and, together with the carrier plates (205), form a T-shaped contour protruding over the drum (2).

4. The pick-up device (100) as claimed in one of claims 1 to 3, **characterized in that** the tine ring (210) forms an annular contour with wedge-shaped receptacles for the tine segments (147).

5. The pick-up device as claimed in one of claims 1 to 4, **characterized in that** the strippers (12")
- have a beginning (218) and a free end (217),
- are coupled on one side in the region of their beginning (218) to a frame (209) of the pick-up device directly or by means of connecting components,
- loop around the drum (2) at least to an extent such that the ends (217) cut through a horizontal plane (222) defined by the centre points (M1) of the tine rings (210).

6. The pick-up device as claimed in claim 5, **characterized in that** the end (217) of the strippers (12") loops around the drum (2) starting from the horizontal plane (222) by an angle (α) which is 0° to 160°.

7. The pick-up device as claimed in one of claims 1 to 6, **characterized in that**
- the tine segment (147) is produced from an elastic plastics material,
- comprises a base (5) with a fastening region (101) for connecting the tine segment (147) to the tine ring (210), and at least one feed tine (3) protruding from the base (5),
- is mounted on the tine ring (210) by means of a latching and/or screw connection without the tine ring (210) being removed and
- the tine segment (147) comprises a slot (213) which is plugged onto a lug (212) provided on the tine ring (210), and therefore an interlocking connection is produced between tine segment (147) and tine ring (210).

8. A harvesting machine (200) for stalk and leaf material, or a hay-making machine, comprising a pick-up device (100) as claimed in one of claims 1 to 7.

## Revendications

1. Dispositif de réception rotatif (100) pour une machine de récolte agricole (200) pour recevoir des récoltes, comprenant :
- un tambour en forme de cylindre (2) comprenant une surface d'enveloppe extérieure (4) qui présente un diamètre extérieur (D),
- une pluralité d'anneaux de dents (10 ; 10'; 10" ; 210), disposés sur la surface d'enveloppe extérieure (4) du tambour (2) et dépassant au-delà du diamètre extérieur (D) du tambour (2),
- des espaces intermédiaires (11) étant prévus entre des anneaux de dents adjacents (10 ; 10'; 10" ; 210), lesquels reçoivent des éléments de raclage (12 ; 12' ; 12"),
- et les anneaux de dents (10 ; 10'; 10" ; 210) comprenant des segments de dents (15 ; 47 ; 47' ; 47" ; 47''' ; 147) qui, dans l'état monté, sont disposés complètement au-dessus de la surface d'enveloppe (4) et sont fabriqués à partir d'un plastique élastique,
- les anneaux de dents (10 ; 10'; 10" ; 210) et les segments de dents (15 ; 47 ; 47' ; 47" ; 47''' ; 147) comprenant des moyens de fixation complémentaires les uns des autres au moyen desquels les segments de dents (15 ; 47 ; 47' ; 47" ; 47''' ; 147) sont montés sur l'anneau de dents (10 ; 10'; 10" ; 210) sans démontage de l'anneau de dents (10 ; 10'; 10" ; 210),
**caractérisé en ce que** l'anneau de dents (10 ; 10'; 10" ; 210) présente un rayon (R1) qui est supérieur à un rayon (R2) de l'élément de raclage (12 ; 12' ; 12") dans la région avant, vue dans la direction de conduite (FA), du dispositif de réception (100), de telle sorte que lorsque le dispositif de réception (100) se trouve dans l'insert de travail, le produit de récolte à recevoir vienne d'abord en contact avec l'anneau de dents (10 ; 10'; 10" ; 210) en rotation et soit entraîné par celui-ci avant de venir en contact avec l'élément de raclage (12 ; 12' ; 12").

2. Dispositif de réception (100) selon la revendication 1, **caractérisé en ce qu'**une connexion par vissage, une connexion par encliquetage ou une connexion par vissage et encliquetage combinée de l'anneau de dents (10 ; 10'; 10" ; 210) et du segment de dents (15 ; 47 ; 47' ; 47" ; 47''' ; 147) est établie au moyen des moyens de fixation.

3. Dispositif de réception (100) selon l'une quelconque des revendications 1 et 2, **caractérisé en ce que** l'anneau de dents (210) comprend des tôles d'appui (206) et des tôles de support (205), les tôles d'appui (206) étant disposées perpendiculairement par rapport au tambour (2) et constituant, conjointement avec les tôles de support (205), un contour en forme de T dépassant au-delà du tambour (2).

4. Dispositif de réception (100) selon l'une quelconque des revendications 1 à 3, **caractérisé en ce que** l'anneau de dents (210) présente un contour annulaire avec des logements en forme de cale pour les segments de dents (147).

5. Dispositif de réception selon l'une quelconque des revendications 1 à 4, **caractérisé en ce que** les éléments de raclage (12")
- présentent un début (218) et une extrémité libre (217),
- sont accouplés d'un côté dans la région de leur début (218) directement ou au moyen de composants de connexion à un cadre (209) du dispositif de réception ;
- et enveloppent le tambour (2) au moins dans une mesure telle que les extrémités (217) intersectent un plan horizontal (222) défini par les centres (M1) des anneaux de dents (210).

6. Dispositif de réception selon la revendication 5, **caractérisé en ce que** l'extrémité (217) des éléments de raclage (12") enveloppe le tambour (2) à partir du plan horizontal (222) sur un angle (a) compris entre 0° et 160°.

7. Dispositif de réception selon l'une quelconque des revendications 1 à 6, **caractérisé en ce que**
- le segment de dents (147) est fabriqué à partir de matériau en plastique élastique,
- comprend un socle (5) avec une région de fixation (101) pour la connexion du segment de dents (147) à l'anneau de dents (210) et comprend au moins une dent de transport (3) dépassant hors du socle (5),
- est monté au moyen d'une connexion par encliquetage et/ou par vissage sur l'anneau de dents (210) sans démontage de l'anneau de dents (210) et
- le segment de dents (147) comprend une fente (213) qui est enfichée sur un ergot (212) prévu sur l'anneau de dents (210) de telle sorte qu'entre le segment de dents (147) et l'anneau de dents (210) soit établie une connexion par engagement par correspondance de formes.

8. Machine de récolte (200) pour des produits à tiges et à feuilles ou faneuse comprenant un dispositif de réception (100) selon l'une quelconque des revendications 1 à 7.
